(19) **Europäisches Patentamt European Patent Office Office européen des brevets**

(11) **EP 3 831 008 B1**

(12) **EUROPEAN PATENT SPECIFICATION**

(45) Date of publication and mention
of the grant of the patent:
**30.04.2025 Bulletin 2025/18**

(21) Application number: **19843075.3**

(22) Date of filing: **02.08.2019**

(51) International Patent Classification (IPC):
$H04J\ 13/00^{(2011.01)}$  $H04B\ 1/69^{(2011.01)}$
$H04L\ 5/00^{(2006.01)}$  $H04L\ 27/26^{(2006.01)}$
$H04L\ 1/1829^{(2023.01)}$  $H04L\ 1/1607^{(2023.01)}$

(52) Cooperative Patent Classification (CPC):
**H04B 1/69; H04J 13/0062; H04J 13/0074;
H04L 5/001; H04L 5/003; H04L 27/2602;**
H04B 2001/6904; H04L 1/1671; H04L 1/1858;
H04L 1/1861; H04L 5/0051; H04L 27/26025;
H04L 27/261

(86) International application number:
**PCT/US2019/044995**

(87) International publication number:
**WO 2020/028868 (06.02.2020 Gazette 2020/06)**

(54) **NEW RADIO (NR) PHYSICAL UPLINK CONTROL CHANNEL (PUCCH) FORMATS FOR NR-UNLICENSED**

FORMATE PHYSIKALISCHER UPLINK-STEUERKANÄLE (PUCCH) IN NEW RADIO (NR) FÜR NR OHNE LIZENZ

FORMATS DE CANAL PHYSIQUE DE COMMANDE DE LIAISON MONTANTE (PUCCH) NEW RADIO (NR) POUR DES BANDES SANS LICENCE NR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2018 US 201862713985 P**

(43) Date of publication of application:
**09.06.2021 Bulletin 2021/23**

(60) Divisional application:
**24162441.0 / 4 358 452**

(73) Proprietor: **INTEL Corporation
Santa Clara, CA 95054 (US)**

(72) Inventors:
• **XIONG, Gang
Portland, Oregon 97229 (US)**
• **JEON, Jeongho
San Jose, California 95120 (US)**
• **KUNDU, Lopamudra
Santa Clara, California 95054 (US)**

(74) Representative: **HGF
HGF Limited
1 City Walk
Leeds LS11 9DX (GB)**

(56) References cited:
**US-A1- 2017 164 352**

• **HUAWEI ET AL:** "UL PHY channels for NR unlicensed", vol. RAN WG1, no. Busan, Korea; 20180521 - 20180525, 11 May 2018 (2018-05-11), XP051461631, Retrieved from the Internet <URL:http://www.3gpp.org/ftp/tsg%5Fran/WG1%5FRL1/TSGR1%5F93/Docs> [retrieved on 20180511]
• **INTERDIGITAL INC:** "On UL Signals and Channels in NR-Unlicensed", vol. RAN WG1, no. Busan, Korea; 20180521 - 20180525, 12 May 2018 (2018-05-12), XP051462861, Retrieved from the Internet <URL:http://www.3gpp.org/ftp/tsg%5Fran/WG1%5FRL1/TSGR1%5F93/Docs> [retrieved on 20180512]

- HUAWEI ET AL: "UCI transmission in NR operations in unlicensed", vol. RAN WG1, no. Sanya, China; 20180416 - 20180420, 15 April 2018 (2018-04-15), XP051425979, Retrieved from the Internet <URL:http://www.3gpp.org/ftp/Meetings%5F3GPP%5FSYNC/RAN1/Docs/> [retrieved on 20180415]
- HUAWEI ET AL.: "UL PHY channels for NR unlicensed", RI-1805921, 3GPP TSG RAN WG1 MEETING #93, 11 May 2018 (2018-05-11), Busan, Korea, XP051461631
- "On UL Signals and Channels in NR-Unlicensed", RI-1807035, 3GPP TSG RAN WG1 MEETING #93, 12 May 2018 (2018-05-12), Busan, Korea, XP051462861
- SAMSUNG: "Uplink signal and channel design for NR-U", RI-1806760, 3GPP TSG RAN WG1 MEETING #93, 11 May 2018 (2018-05-11), Busan, Korea, XP051461960
- "Potential enhancements to NR UL signals and channels for unlicensed operation", RI-1806543, 3GPP TSG RAN WG1 MEETING #93, 12 May 2018 (2018-05-12), Busan, Korea, XP051462602

**Description**

**BACKGROUND**

Wireless systems typically include multiple User Equipment (UE) devices communicatively coupled to one or more Base Stations (BS). The one or more BSs may be Long Term Evolved (LTE) evolved NodeBs (eNB) or new radio (NR) NodeBs (gNB), next generation node Bs (gNB), or new radio base stations (NR BS) that can be communicatively coupled to one or more UEs by a Third-Generation Partnership Project (3GPP) network.

Next generation wireless communication systems are expected to be a unified network/system that is targeted to meet vastly different and sometimes conflicting performance dimensions and services. New Radio Access Technology (RAT) is expected to support a broad range of use cases including Enhanced Mobile Broadband (eMBB), Massive Machine Type Communication (mMTC), Mission Critical Machine Type Communication (uMTC), and similar service types operating in frequency ranges up to 100 GHz.

HUAWEI ET AL, "UL PHY channels for NR unlicensed", vol. RAN WG1, no. Busan, Korea; 20180521 - 20180525, (20180511), 3GPP DRAFT; R1-1805921, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, relates to UL PHY channels for NR unlicensed. The design considerations of the UL physical channels, i.e, PUSCH, PUCCH, and PRACH, are discussed including interlace-based design, PUCCH formats and waveform adaptation, as well as PRACH numerology, waveform and formats.

INTERDIGITAL INC, "On UL Signals and Channels in NR-Unlicensed", vol. RAN WG1, no. Busan, Korea; 20180521 - 20180525, (20180512), 3GPP DRAFT; R1-1807035 ON UL SIGNALS AND CHANNELS IN NR-UNLICENSED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA, relates to UL Signals and Channels in NR-Unlicensed, in particular the UL physical layer design for NR operation in unlicensed spectrum for below 6 GHz. The physical uplink data channel (PUSCH), physical uplink control channel (PUCCH), and physical random access channel (PRACH) design aspects for NR-U are discussed.

**SUMMARY**

Aspects and embodiments are set out in the appended claims.

**BRIEF DESCRIPTION OF THE DRAWINGS**

Features and advantages of the disclosure will be apparent from the detailed description which follows, taken in conjunction with the accompanying drawings, which together illustrate, by way of example, features of the disclosure; and, wherein:

FIG. 1 illustrates a block diagram of a Third-Generation Partnership Project (3GPP) New Radio (NR) Release 15 frame structure in accordance with an example;

FIG. 2a illustrates functionality of mapping sequences in the frequency domain in accordance with an example;

FIG. 2b illustrates functionality of mapping sequences in the frequency domain in accordance with an example;

FIG. 2c illustrates functionality of mapping sequences in the frequency domain in accordance with an example;

FIG. 2d illustrates functionality of mapping sequences in the frequency domain in accordance with an example;

FIG. 2e illustrates functionality of mapping sequences in the frequency domain in accordance with an example;

FIG. 2f illustrates functionality of mapping sequences in the frequency domain in accordance with an example;

FIG. 2g illustrates functionality of frequency hopping in accordance with an example;

FIG. 3a illustrates functionality of mapping demodulation reference signal (DMRS) and uplink control information (UCI) in the frequency domain in accordance with an example;

FIG. 3b illustrates functionality of mapping demodulation reference signal (DMRS) and uplink control information (UCI) in the frequency domain in accordance with an example;

FIG. 3c illustrates functionality of mapping demodulation reference signal (DMRS) and uplink control information (UCI) in the frequency domain in accordance with an example;

FIG. 3d illustrates functionality of frequency hopping in accordance with an example;

FIG. 4 depicts functionality of a user equipment (UE) operable for new radio (NR) physical uplink control channel (PUCCH) operation in NR-unlicensed (NR-U) in accordance with an example;

FIG. 5 depicts functionality of a new radio node B (gNB) operable for new radio (NR) physical uplink control channel (PUCCH) operation in NR-unlicensed (NR-U) in accordance with an example;

FIG. 6 depicts a flowchart of a machine-readable storage medium having instructions embodied thereon for new radio (NR) physical uplink control channel (PUCCH) operation in NR-unlicensed (NR-U) in accordance with an example;

FIG. 7 illustrates an example architecture of a system of a network in accordance with an example;

FIG. 8 illustrates an example of a platform or device in accordance with an example;

FIG. 9 illustrates example components of baseband circuitry and radio front end modules (RFEM) in accordance with an example;

FIG. 10 is a block diagram illustrating components able to read instructions from a machine-readable or computer-readable medium in accordance with an example; and

FIG. 11 illustrates a diagram of a wireless device (e.g., UE) in accordance with an example.

Reference will now be made to the exemplary embodiments illustrated, and specific language will be used herein to describe the same. It will nevertheless be understood that no limitation of the scope of the technology is thereby intended.

## DETAILED DESCRIPTION

Before the present technology is disclosed and described, it is to be understood that this technology is not limited to the particular structures, process actions, or materials disclosed herein, but is extended to equivalents thereof as would be recognized by those ordinarily skilled in the relevant arts. It should also be understood that terminology employed herein is used for the purpose of describing particular examples only and is not intended to be limiting. The same reference numerals in different drawings represent the same element. Numbers provided in flow charts and processes are provided for clarity in illustrating actions and operations and do not necessarily indicate a particular order or sequence.

## EXAMPLE EMBODIMENTS

An initial overview of technology embodiments is provided below and then specific technology embodiments are described in further detail later. This initial summary is intended to aid readers in understanding the technology more quickly but is not intended to identify key features or essential features of the technology nor is it intended to limit the scope of the claimed subject matter.

Mobile communication has advanced remarkably in the past two decades: emerging from early voice systems and transforming into today's highly sophisticated integrated communication platform. The next generation wireless communication system, 5G, or new radio (NR) is going to provide ubiquitous connectivity and access to information, as well as ability to share data, around the globe. NR is expected to be a unified framework that will target to meet versatile and sometimes, conflicting performance criteria and provide services to vastly heterogeneous application domains ranging from Enhanced Mobile Broadband (eMBB) to massive Machine-Type Communications (mMTC) and Ultra-Reliable Low-Latency Communications (URLLC), to name a few. In general, NR will evolve based on third generation partnership project (3GPP) long term evolution (LTE)-Advanced technology with additional enhanced radio access technologies (RATs) to enable seamless and faster wireless connectivity solutions.

One major enhancement for LTE in Release 13 has been to enable the operation of cellular networks in the unlicensed spectrum, via Licensed-Assisted-Access (LAA). Ever since, exploiting the access of unlicensed spectrum is considered by 3GPP as one promising solution to cope with the increasing growth of wireless data traffic. One important consideration for unlicensed spectrum includes fair co-existence with incumbent systems like wireless local area networks (WLANs), which has been the primary focus of LAA standardization efforts since Release 13.

Following the trend of LTE enhancements, study on NR based access to unlicensed spectrum (NR-unlicensed) has started in 3GPP Release 15. In 3GPP Radio Access Network (RAN) meeting #77, a new study item (SI) on "NR-Based Access to Unlicensed Spectrum" was approved. Within the scope of this SI, one of the primary objectives was to identify additional functionalities for a physical (PHY) layer design of NR to operate in unlicensed spectrum. In particular, it is desirable to minimize the design efforts by identifying the enhancements for Release 15 NR design to enable unlicensed operation, while avoiding divergence from the Release 15 NR licensed framework. Coexistence methods defined for LTE-based LAA context may be assumed as a baseline for the operation of NR-unlicensed systems. NR-based operation in unlicensed spectrum should not impact deployed Wi-Fi services (data, video, and voice services) more than an additional Wi-Fi network on the same carrier.

Regulations should be followed by networks and systems operating in the unlicensed spectrum. One such regulatory restriction imposed on physical channels or signals operating in the unlicensed spectrum is related to the bandwidth occupied by these channels or signals (i.e. an Occupied Channel Bandwidth (OCB)). According to European Telecommunications Standards Institute (ETSI) standards for 5 gigahertz (GHz), limits on OCB are stated as follows: "The Occupied Channel Bandwidth shall be between 80% and 100% of the Nominal Channel Bandwidth. In case of smart antenna systems (devices with multiple transmit chains) each of the transmit chains shall meet this regulation. The Occupied Channel Bandwidth might change with time/payload. During a Channel Occupancy Time (COT), equipment may operate temporarily with an Occupied Channel Bandwidth of less than 80% of its Nominal Channel Bandwidth with a minimum of 2 [megahertz] MHz."

In addition to restrictions on OCB, there are important regulatory rules on power usage by networks and systems operating in unlicensed spectrum. Regulations on the maximum power spectral density can be stated with a resolution bandwidth of 1 MHz. The ETSI specification uses a maximum Power Spectral Density (PSD) of 10 decibel-milliwatts (dBm)/MHz for 5150-5350 MHz, while the Federal Communications Commission (FCC) uses a maximum PSD of 11 dBm/MHz for 5150-5350 MHz. Additionally, regulations can use 10 kilohertz (kHz) resolution for testing the 1 MHz PSD constraint and the maximum PSD constraint can be followed in any occupied 1MHz bandwidth. In addition, regulations can impose a band specific total maximum transmission power in terms of EIRP (e.g., ESTI with an effective isotropic radiated power (EIRP) limit of 23 dBm for 5150 - 5350 MHz.

The regulatory limitations imposed in terms of OCB and PSD guided the design choices for the uplink channels of legacy LTE-unlicensed system and can be used for NR-unlicensed systems as well. Legacy LTE-unlicensed systems or Release 14 eLAA (enhanced Licensed Assisted Access) was designed to meet the aforementioned regulations while utilizing the available spectrum efficiently. But the enhancement of LTE-unlicensed design to NR-unlicensed may be different because NR can be targeted to support diverse numerology configurations with a much wider channel bandwidth than LTE's 20 MHz. Though it can be desirable to avoid divergence from Release 15 NR framework as much as possible while designing uplink physical signals or channels for NR-unlicensed spectrum, NR physical signals or channels can be redesigned to fulfill the regulations of unlicensed spectrum usage.

The baseline physical uplink control channel (PUCCH) design can be based on different PUCCH formats used in NR licensed spectrum (e.g., NR -PUCCH formats 0, 1, 2, 3 or 4). Legacy NR-licensed PUCCH design may not be suitable for NR-unlicensed spectrum because unlicensed spectrum utilization can be restricted by regulatory limitations (e.g., OCB and PSD) which may not be fulfilled by legacy NR-PUCCH formats designed for licensed spectrum.

In one example, an apparatus of a user equipment (UE) can be operable for new radio (NR) physical uplink control channel (PUCCH) operation in NR-unlicensed (NR-U). The apparatus can comprise: one or more processors configured to: identify, at the UE, a minimum occupied bandwidth of a PUCCH based on a regulation of a regulatory body; map, at the UE, in each of n symbols, a sequence in $M_{RB}^{PUCCH,x}$ physical resource blocks (PRBs) based on the minimum occupied bandwidth of the PUCCH, wherein each PRB of the $M_{RB}^{PUCCH,x}$ PRBs includes $N_{SC}^{RB}$ subcarriers and the $M_{RB}^{PUCCH,x}$ PRBs are distributed in the frequency domain, and wherein n is a positive integer, $M_{RB}^{PUCCH,x}$ is a positive integer, and $N_{SC}^{RB}$ is a positive integer; and encode, at the UE, information on the $M_{RB}^{PUCCH,x}$ PRBs for transmission on the PUCCH. The apparatus can further comprise a memory interface configured to retrieve the information from a memory.

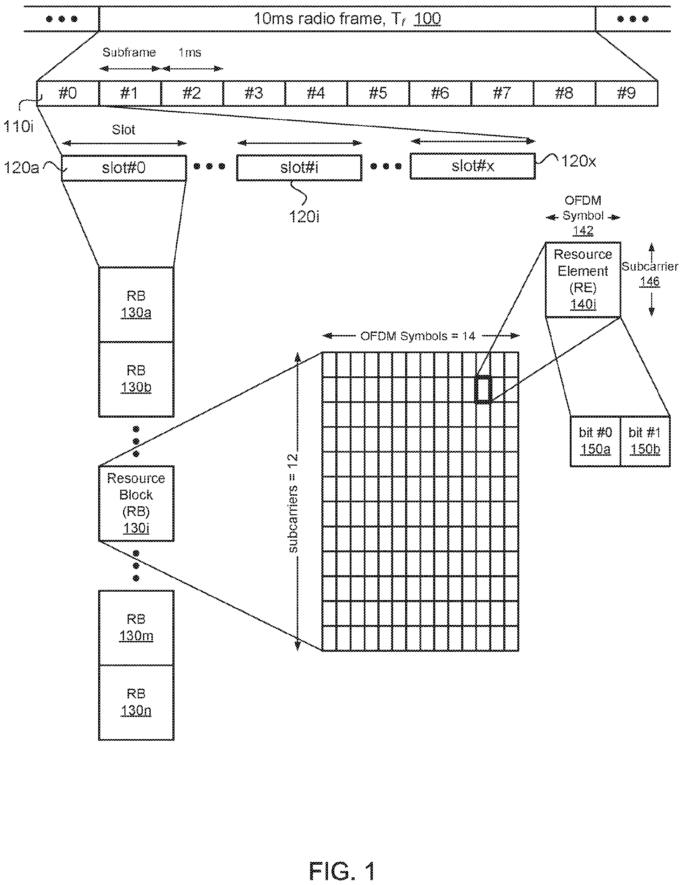

FIG. 1 provides an example of a 3GPP NR Release 15 frame structure. In particular, FIG. 1 illustrates a downlink radio frame structure. In the example, a radio frame 100 of a signal used to transmit the data can be configured to have a duration, $T_f$, of 10 milliseconds (ms). Each radio frame can be segmented or divided into ten subframes 110i that are each 1 ms long. Each subframe can be further subdivided into one or multiple slots 120a, 120i, and 120x, each with a duration, $T_{slot}$, of 1 / μ ms, where μ = 1 for 15kHz subcarrier spacing, μ = 2 for 30kHz, μ = 4 for 60kHz, μ = 8 for 120kHz, and u = 16 for 240kHz. Each slot can include a physical downlink control channel (PDCCH) and/or a physical downlink shared channel (PDSCH).

Each slot for a component carrier (CC) used by the node and the wireless device can include multiple resource blocks (RBs) 130a, 130b, 130i, 130m, and 130n based on the CC frequency bandwidth. The CC can have a carrier frequency having a bandwidth. Each slot of the CC can include downlink control information (DCI) found in the PDCCH. The PDCCH is transmitted in control channel resource set (CORESET) which can include one, two or three Orthogonal Frequency Division Multiplexing (OFDM) symbols and multiple RBs.

Each RB (physical RB or PRB) can include 12 subcarriers (on the frequency axis) and 14 orthogonal frequency-division multiplexing (OFDM) symbols (on the time axis) per slot. The RB can use 14 OFDM symbols if a short or normal cyclic prefix is employed. The RB can use 12 OFDM symbols if an extended cyclic prefix is used. The resource block can be mapped to 168 resource elements (REs) using short or normal cyclic prefixing, or the resource block can be mapped to 144 REs (not shown) using extended cyclic prefixing. The RE can be a unit of one OFDM symbol 142 by one subcarrier (i.e., 15 kHz, 30kHz, 60kHz, 120kHz, and 240kHz) 146.

Each RE 140i can transmit two bits 150a and 150b of information in the case of quadrature phase-shift keying (QPSK) modulation. Other types of modulation may be used, such as 16 quadrature amplitude modulation (QAM) or 64 QAM to transmit a greater number of bits in each RE, or bi-phase shift keying (BPSK) modulation to transmit a lesser number of bits (a single bit) in each RE. The RB can be configured for a downlink transmission from the NR BS to the UE, or the RB can be configured for an uplink transmission from the UE to the NR BS.

This example of the 3GPP NR Release 15 frame structure provides examples of the way in which data is transmitted, or the transmission mode. The example is not intended to be limiting. Many of the Release 15 features will evolve and change in the 5G frame structures included in 3GPP LTE Release 15, MulteFire Release 1.1, and beyond. In such a system, the design constraint can be on co-existence with multiple 5G numerologies in the same carrier due to the coexistence of different network services, such as eMBB (enhanced Mobile Broadband), mMTC (massive Machine Type Communications or massive IoT) and URLLC (Ultra Reliable Low Latency Communications or Critical Communications). The carrier in a 5G system can be above or below 6GHz. In one embodiment, each network service can have a different numerology.

In another example, some of the NR PUCCH formats may not be able to meet the OCB criteria for enabling its operation in the unlicensed spectrum. Enhancements of NR-PUCCH formats 0/1/2/3/4 can be used to fulfill regulations relating to unlicensed operation.

## Enhancements of NR PUCCH format 0

In one example, for a 1-symbol NR PUCCH format 0, a length-12 sequence can be repeatedly mapped across frequency on $M_{RB}^{PUCCH,0}$ PRBs, wherein each PRB can include 12 sub-carriers. The mapping can be contiguous (i.e. localized) or non-contiguous (i.e. distributed or interlaced), or a combination thereof, to fulfill the OCB criteria, wherein:

$$M_{RB}^{PUCCH,0} \geq \lceil\{OCB/(N_{SC}^{RB} * SCS)\}\rceil.$$

In another example, OCB can be the minimum bandwidth to be occupied by PUCCH format 0 to meet regulations (for example, 80%-100% of nominal channel bandwidth or 2 MHz bandwidth), wherein $N_{SC}^{RB}$ can be the number of sub-carriers per PRB (e.g., 12) and SCS can be the sub-carrier spacing (for example, in the sub-6 GHz frequency range, the SCS can be 15, 30, or 60 kHz). Scaling can be applied if the OCB and SCS are expressed in different units (e.g., OCB in units of MHz and SCS in units of kHz).

In another example, the length-12 base sequence can be mapped on $M_{RB}^{PUCCH,0}$ PRBs by applying $M_{RB}^{PUCCH,0}$ cyclic shifts. Different cyclic shifts can be applied on different PRBs. The cyclic shift pattern in different PRBs can be predefined in the specification or configured by higher layers via NR minimum system information (MSI), NR remaining minimum system information (RMSI), NR other system information (OSI), or radio resource control (RRC) signaling. In another example, the cyclic shift pattern in different PRBs can be defined as a function of physical or virtual cell ID, symbol or slot index, or the like. In one example, a constant cyclic shift offset can be applied on different PRBs.

In another example, the base sequence $r_{u,v}^{(\alpha_{l,i},\delta)}(n)$ can be mapped on the i-th PRB

$(i = 0, 1, \Lambda \, (M_{RB}^{PUCCH,0} - 1))$ and can be defined by a cyclic shift $\alpha_{l,i}$ of a base sequence $\bar{r}_{u,v}(n)$ according to

$$r_{u,v}^{(\alpha_{l,i},\delta)}(n) = e^{j\alpha_{l,i}n}\bar{r}_{u,v}(n)$$

, $0 \leq n < M_{ZC}$, where $M_{ZC}$ is the length of the sequence and

$$\alpha_{l,i} = \tfrac{2\pi}{N_{SC}^{RB}}\left(\left(m_0 + m_{CS} + m_{i,\Delta} + n_{CS}\left(n_{s,f}^{\mu}, l + l'\right)\right) \bmod N_{SC}^{RB}\right),$$

wherein $m_{i,\Delta}$ can be a constant cyclic shift offset (e.g. $m_{i,\Delta} = i. \, m_{offset}$, where $m_{offset}$ can be a constant cyclic shift offset) or can be a function of physical or virtual cell ID, symbol or slot index, or the like. The sequence x(n) can be mapped on PUCCH format 0 transmission bandwidth of $M_{SC}^{PUCCH,0} = N_{SC}^{RB}.M_{RB}^{PUCCH,0}$ and can be generated according to:

$$x\left(l. M_{SC}^{PUCCH,0} + k\right) = r_{u,v}^{(\alpha_{l,i},\delta)}(k \bmod N_{SC}^{RB})$$

$$k = 0, 1, \ldots, M_{SC}^{PUCCH,0} - 1$$

$$i = \lfloor k/N_{SC}^{RB} \rfloor$$

$$l = 0, 1, \ldots, N_{symb}^{PUCCH,0} - 1,$$

wherein $N_{symb}^{PUCCH,0}$ can be the number of symbols used for PUCCH format 0 transmission (e.g. $N_{symb}^{PUCCH,0} = \{1,2\}$ for NR PUCCH format 0) and $M_{SC}^{PUCCH,0}$ can be the total number of frequency sub-carriers on one symbol used for PUCCH format 0 transmission to fulfill the OCB criteria.

In another example, the same length-12 sequence (with the same cyclic shift) can be repeatedly mapped on $M_{RB}^{PUCCH,0}$ PRBs by applying additional phase offsets on each of these repetitions. The phase offsets can be predefined in the specification, randomly selected by the UE, or configured by higher layers via MSI, RMSI, OSI or RRC signaling.

In another example, different base sequences (with cyclic shift hopping and/or base sequence hopping being applied) can be mapped on $M_{RB}^{PUCCH,0}$ PRBs. Additional phase offsets can be applied on the $M_{RB}^{PUCCH,0}$ different base sequences.

In another example, the base sequence $r_{u_i,v}^{(\alpha,\delta)}(n)$ can be mapped on the i-th PRB $(i = 0, 1, \Lambda \, (M_{RB}^{PUCCH,0} - 1))$ and can be defined by a cyclic shift $\alpha$ of a base sequence $\bar{r}_{u,v}(n)$ according to

$$r_{u_i,v}^{(\alpha,\delta)}(n) = e^{j\alpha n}\bar{r}_{u_i,v}(n)$$, $0 \leq n < M_{ZC}$, wherein $M_{ZC}$ can be the length of the sequence and the sequence group $u_i$ can be given by:

$$u_i = \left(f_{gh} + f_{ss} + f_{i,\Delta}\right)\bmod 30.$$

In another example $f_{l,\Delta}$ can be a fixed sequence group offset (e.g., $f_{i,\Delta} = i.f_{offset}$, where $f_{offset}$ can be a fixed value), or a function of physical or virtual cell ID, symbol or slot index, or the like. The sequence x(n) can be mapped on PUCCH format 0 transmission bandwidth of $M_{SC}^{PUCCH} = N_{SC}^{RB}.M_{RB}^{PUCCH}$ can be generated according to:

$$x\left(l.M_{SC}^{PUCCH,0} + k\right) = r_{u_i,v}^{(\alpha,\delta)}(k \bmod N_{SC}^{RB})$$

$$k = 0, 1, ..., M_{SC}^{PUCCH,0} - 1$$
$$i = \lfloor k/N_{SC}^{RB} \rfloor$$
$$l = 0, 1, ..., N_{symb}^{PUCCH,0} - 1,$$

wherein, $N_{symb}^{PUCCH,0}$ can be the number of symbols used for PUCCH format 0 transmission (e.g. $N_{symb}^{PUCCH,0} = \{1,2\}$ for NR PUCCH format 0) and $M_{SC}^{PUCCH,0}$ can be the total number of frequency sub-carriers on one symbol used for PUCCH format 0 transmission to fulfill the OCB criteria.

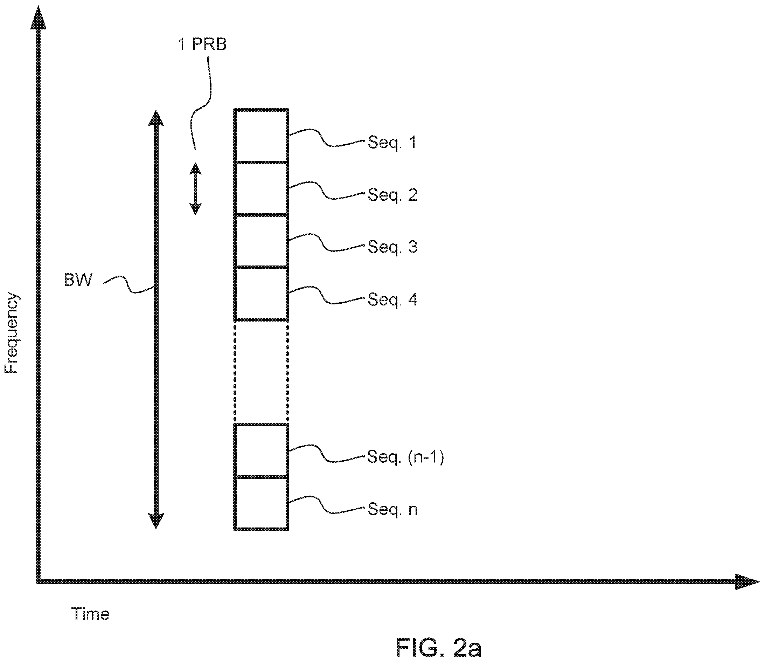

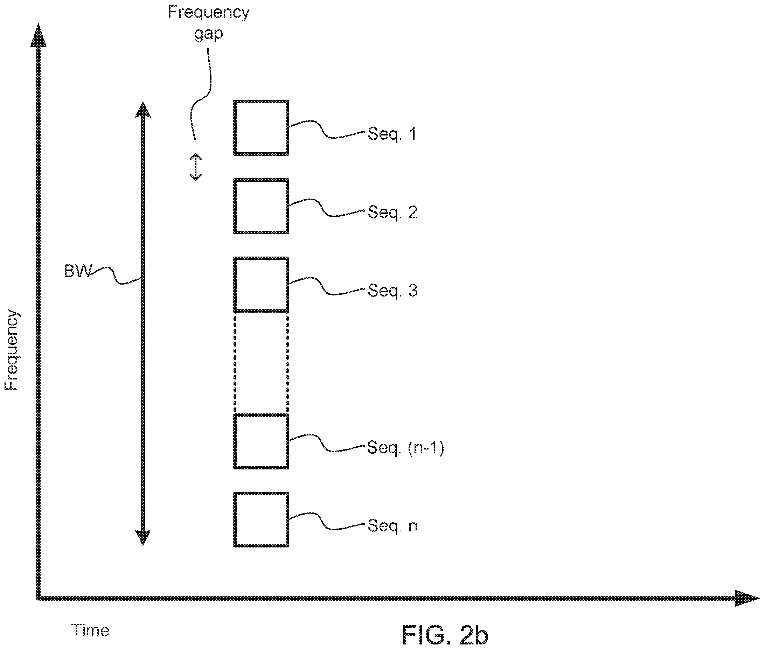

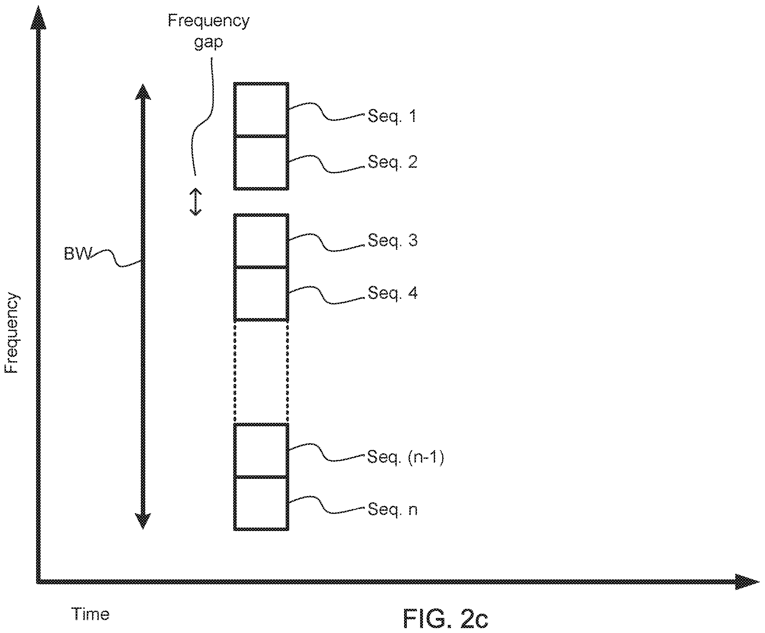

In another example, FIGS. 2a - 2c illustrate the mapping of n sequences across frequency, in a contiguous manner (FIG. 2a), a non-contiguous/interlaced manner (FIG. 2b), and a combination thereof (FIG. 2c), wherein the n sequences can have different cyclic shifts and/or different phase offsets and/or different base sequences as described in the above embodiments. The transmission bandwidth over n PRBs can be greater than or equal to the OCB, as previously discussed. Sequence mapping across PRB as shown in FIG 2c is an example of interlace based PUCCH format 0 transmission wherein two consecutive interlaces can be assigned to PUCCH format 0.

In another example, for 1-symbol NR PUCCH format 0, a length-$l$ (e.g., $l \geq 12$ or, $l < 12$), low peak-to-average power ratio (PAPR) sequence (e.g., Zadoff-Chu (ZC) sequence or computer generated sequence (CGS)) can be used and mapped across frequency on L subcarriers, which may be contiguous (i.e. localized), non-contiguous (i.e. distributed or interlaced), or a combination thereof, to fulfill the OCB criteria, wherein:

$$L \geq \lceil \{OCB/(SCS)\} \rceil$$

and $l$ can be a factor of *L and* other quantities (e.g., OCB and SCS) can be similar to the above example.

In another example, the same length-$l$ base sequence can be mapped on L frequency sub-carriers by applying $L/l$ cyclic shifts. The cyclic shift pattern can be predefined in the specification or configured by higher layers via NR minimum system information (MSI), NR remaining minimum system information (RMSI), NR other system information (OSI), or radio resource control (RRC) signaling. In another example, the cyclic shift pattern can be defined as a function of physical or virtual cell ID, symbol or slot index, or the like. In another example, a constant cyclic shift offset can be applied to generate $L/l$ different cyclic shifts.

In another example, the length-$l$ sequence (with the same cyclic shift) can be repeatedly mapped on L frequency sub-carriers by applying additional phase offsets on each of these repetitions.

In another example, different base sequences (with cyclic shift hopping and/or base sequence hopping being applied) can be mapped on L frequency sub-carriers. Additional phase offsets can be applied on these $L/l$ different base sequences.

In another example, a length-$l$ sequence can be mapped (e.g., non-contiguously or interlaced) across frequency on $l$ sub-carriers so that the bandwidth occupied by $l$ tones meets the OCB criteria.

In another example, a long computer generated sequence (CGS) or ZC sequence can be applied for the transmission of PUCCH format 0. The length of CGS or ZC sequence can be equal to the length of allocated subcarriers. As one example, a low PAPR sequence $r_{u,v}^{(\alpha,\delta)}(n)$ of length-L can be generated by a cyclic shift $\alpha$ of a base sequence $\bar{r}_{u,v}(n)$ according to $r_{u,v}^{(\alpha,\delta)}(n) = e^{j\alpha n}\bar{r}_{u,v}(n)$, $0 \leq n < M_{ZC}$, wherein $M_{ZC} = mN_{sc}^{RB}/2^\delta$ can be the length of the sequence and $m/2^\delta$ can depend on the interlace size (i.e., when length-L sequence is mapped on an interlace with $m/2^\delta$ PRBs per interlace). In another example, for a bandwidth (BW) of 20 MHz, $m/2^\delta = 10/11$. In another example, a length-L sequence can be mapped on L contiguous frequency sub-carriers.

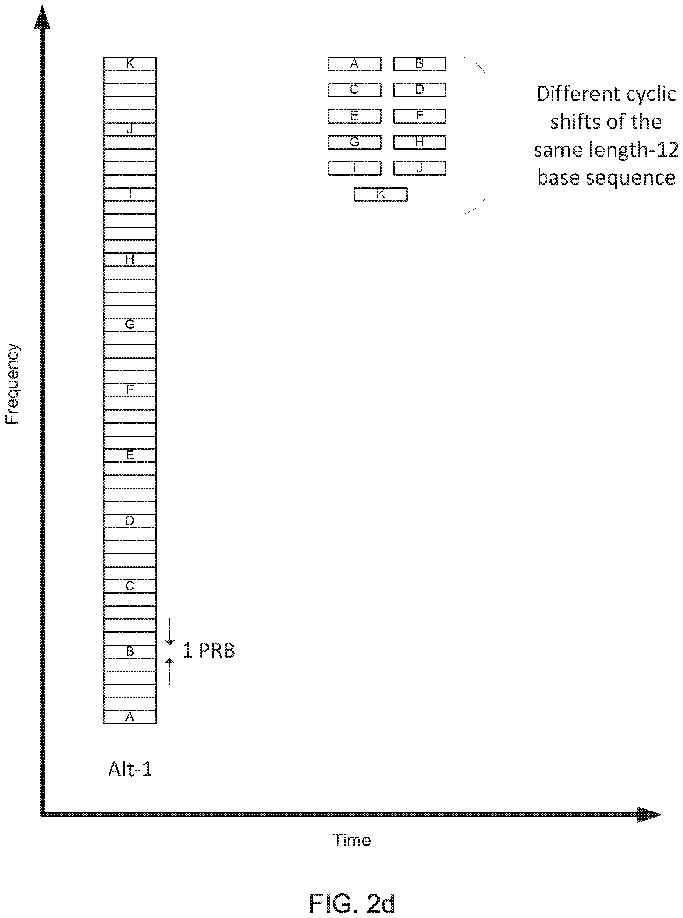

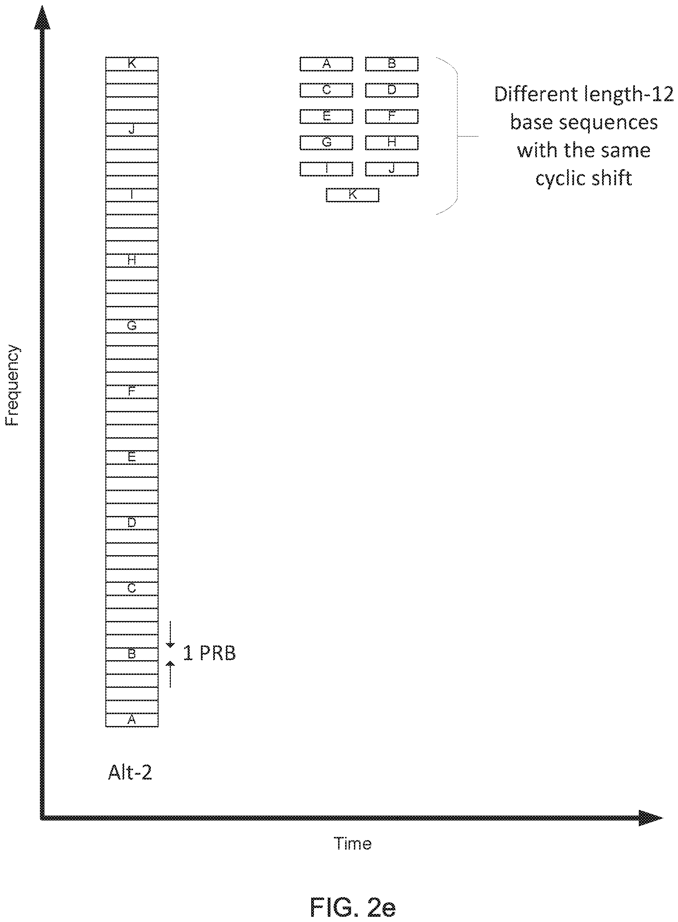

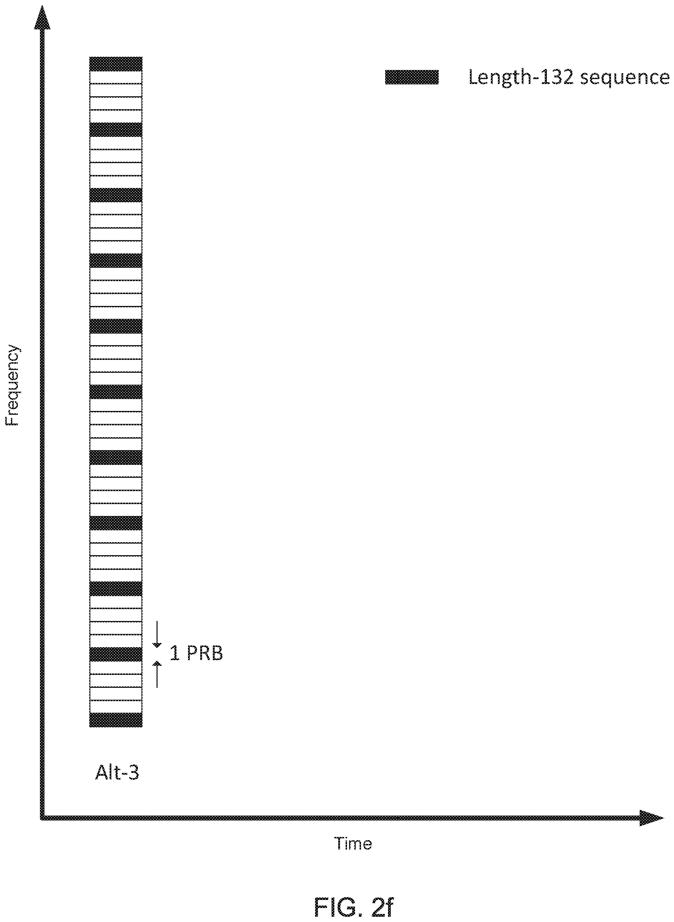

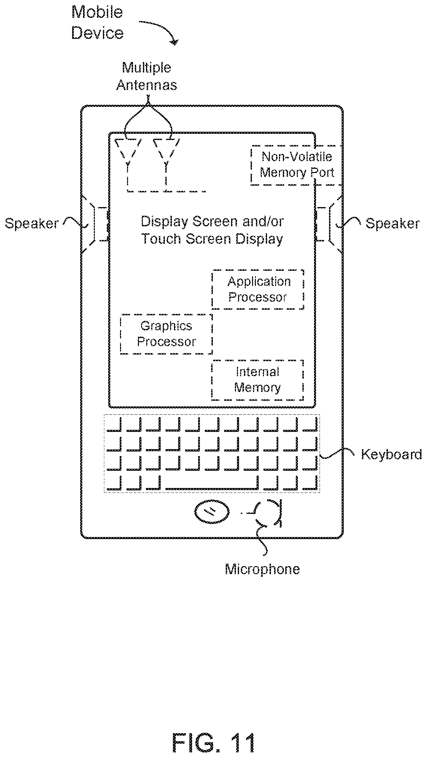

In another example, FIGS. 2d- 2f illustrate different examples of candidate sequence types and mapping schemes for enhancing the NR PUCCH format 0 to support multi-PRB transmissions for 20 MHz BW and 30 KHz SCS (e.g., total number of available PRBs = 51), where the PRBs can be mapped (e.g., non-contiguously or interlaced) across frequency. In FIG. 2d, a single length-12 base sequence can be mapped on 11 PRBs of one interlace by applying 11 different cyclic shifts. In FIG. 2e, 11 different base sequences (with the same cyclic shift) can be mapped on the 11 PRBs on one interlace. In FIG. 2f, a single length-132 low PAPR base sequence (with certain cyclic shift $\alpha$, where $0 \leq \alpha < 132$) can be mapped non-contiguously on 11 PRBs of one interlace.

In another example, for $N$-symbol NR PUCCH format 0, where $N > 1$ (for example, $N = 2$), similar examples as discussed above with relation to $N = 1$ can be applied, wherein the same frequency domain allocation on one symbol can be repeated across N symbols of PUCCH format 0.

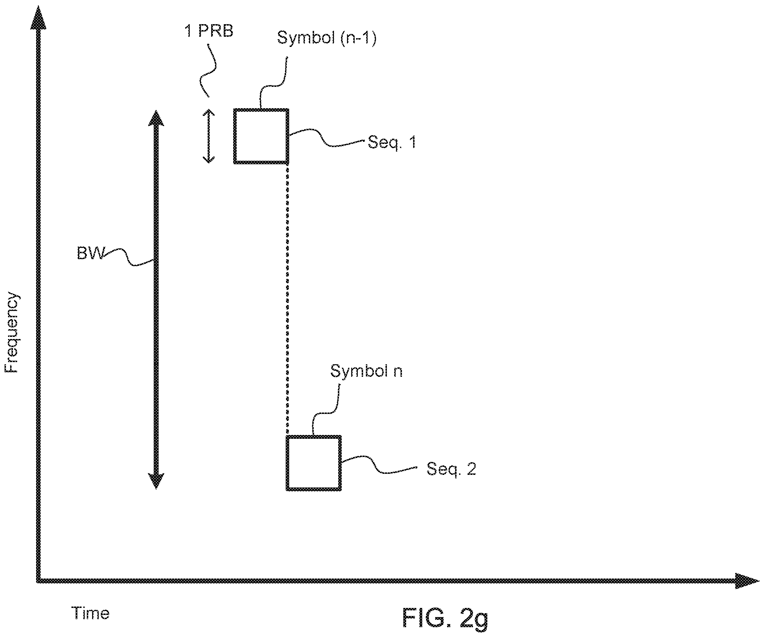

In another example, for N-symbol NR PUCCH format 0, where N > 1 (for example, N = 2), frequency hopping can be enabled so that the total bandwidth occupied by the frequency hops fulfills the OCB criteria. In another example, 2-symbol NR-PUCCH format 0 can be used with frequency hopping being enabled between the 1st and the 2nd symbols so that the total hopping bandwidth (BW) (including the 1st and 2nd hops) can be greater than or equal to the OCB criteria (for example, 80%-100% of nominal channel bandwidth or 2 MHz), as illustrated in FIG. 2g. Base sequence hopping and/or cyclic shift hopping and/or additional phase offset may be applied between the frequency hops.

Enhancements **of NR** PUCCH format **1**

In one example, the DMRS and UCI sequences on different symbols in time can be repeatedly mapped across frequency on the same set of $M_{RB}^{PUCCH,1}$ PRBs (each PRB can include 12 frequency sub-carriers), which may be contiguous (i.e. localized), non-contiguous (i.e. distributed or interlaced), or a combination thereof, to fulfill the OCB criteria, where:

$$M_{RB}^{PUCCH,1} \geq [\{OCB/(N_{SC}^{RB} * SCS)\}].$$

In another example, OCB can be the minimum bandwidth to be occupied by PUCCH format 1 to meet regulations (for example 80%-100% of nominal channel bandwidth or 2 MHz bandwidth), $N_{SC}^{RB}$ can be the number of sub-carriers per PRB (e.g. 12) and SCS can be sub-carrier spacing (for example, in sub-6 GHz frequency range, SCS can be 15, 30, or 60 kHz). Scaling can be applied if the OCB and SCS are expressed in different units (e.g., OCB in units of MHz and SCS in units of kHz).

In another example, the DMRS and UCI sequences can be used in NR PUCCH format 1 (i.e. length-12, low PAPR, computer generated sequences), and can be mapped $M_{RB}^{PUCCH,1}$ times across frequency contiguously or non-contiguously by applying $M_{RB}^{PUCCH,1}$ cyclic shifts.

In another example, the base sequence $r_{u,v}^{(\alpha_{l,i},\delta)}(n)$ for DMRS (and spreading sequence of UCI) can be mapped on the i-th PRB $(i = 0, 1, \Lambda\ (M_{RB}^{PUCCH,1} - 1))$, and can be defined by a cyclic shift $\alpha_{l,i}$ of a base sequence $\bar{r}_{u,v}$ (n) according to $r_{u,v}^{(\alpha_{l,i},\delta)}(n) = e^{j\alpha_{l,i}n}\bar{r}_{u,v}(n)$, $0 \leq n < M_{ZC}$, wherein $M_{ZC}$ can be the length of the sequence and

$$\alpha_{l,i} = \frac{2\pi}{N_{SC}^{RB}}\left(\left(m_0 + m_{CS} + m_{i,\Delta} + n_{CS}\left(n_{s,f}^{\mu}, l + l'\right)\right) \bmod N_{SC}^{RB}\right),$$

wherein $m_{i,\Delta}$ can be a constant cyclic shift offset (e.g. $m_{i,\Delta}$ = i. $m_{offset}$, where $m_{offset}$ is a constant cyclic shift offset) or can be a function of physical or virtual cell ID, symbol or slot index, or the like. A block of complex valued symbols y(n) = $d(0).r_{u,v}^{(\alpha_{l,i},\delta)}(n\ mod\ N_{SC}^{RB})$ can be blockwise spread with orthogonal sequence $w_j(m)$ and mapped on PUCCH format 1 transmission bandwidth of $M_{SC}^{PUCCH,1} = N_{SC}^{RB}\ M_{RB}^{PUCCH,1}$. according to:

$$z\left(m'M_{SC}^{PUCCH,1}N_{SF,m'}^{PUCCH,1} + mM_{SC}^{PUCCH,1} + n\right) = w_j(m).y(n)$$

$$n = 0, 1, \ldots, M_{SC}^{PUCCH,1} - 1$$

$$m = 0, 1, \ldots, N_{SF.m'}^{PUCCH,1} - 1$$

$$m' = \begin{cases} 0 & \text{no intra-slot frequency hopping} \\ 0,1 & \text{intra-slot frequency hopping enabled} \end{cases}$$

wherein $N_{SF,m'}^{PUCCH,1}$ can be given by Table 6.3.2.4.1-1 of 3GPP TS 38.211 V15.5.0 section 6.3.2.4.1, d(0) can be as defined in section 6.3.2.4.1 of 3GPP TS 38.211 V15.5.0 and $M_{SC}^{PUCCH,1}$ can be the total number of frequency sub-carriers on one symbol used for PUCCH format 1 transmission to fulfill the OCB criteria.

In another example, the cyclic shifts applied on DMRS sequences can be the same or different from those applied on UCI sequences. The examples for the design of PUCCH format 0 can be applied for the generation of UCI and DMRS sequence of PUCCH format 1. According to the claimed invention, if $n_{i,DMRS}$ is the cyclic shift applied on the DMRS

$$i = 0, 1, \ldots, M_{RB}^{PUCCH,1} - 1$$

sequence mapped on the i-th PRB ( ), the cyclic shift applied on UCI sequences can be $n_{i,UCI}$, wherein:

$$n_{i,UCI} = \left( n_{i,DMRS} + \nabla_{i,offset} \right) mod\, M_{ZC},$$

wherein $\nabla_{i,offset}$ can be predefined in the specification and can be either a fixed value or a function of system parameters like physical cell ID, slot or symbol index or the like, or provided by higher layer signaling. $M_{ZC}$ can be the length of the sequence (e.g. $M_{ZC}$ = 12). In this example, $n_{i,DMRS}$ can be defined similar to $\alpha_{l,i}$ for enhanced PUCCH format 1 as previously discussed. In another example, m' can be set to 0 (e.g., distributed or interlaced) enhanced PUCCH format 1, with $M_{RB}^{PUCCH,1} > 1$ because frequency diversity can be achieved from distributed PRB allocation without additional frequency hopping.

In another example, the same DMRS and UCI sequences can be repeatedly mapped on $M_{RB}^{PUCCH,1}$ PRBs by applying additional phase offsets on each of these repetitions. The phase offsets applied on DMRS sequences can be the same or different from those applied on UCI sequences.

In another example, different base sequences (with cyclic shift hopping and/or base sequence hopping being applied) can used for DMRS and spreading sequence for UCI to generate each of the $M_{RB}^{PUCCH,1}$ ) copies of PUCCH format 1, to be mapped on $M_{RB}^{PUCCH,1}$ PRBs. Additional phase offsets can be applied on these $M_{RB}^{PUCCH,1}$ different copies of PUCCH format 1 DMRS and UCI sequences, wherein the phase offsets applied on DMRS sequences can be the same or different from those applied on UCI sequences. In another example, the base sequence $r_{u_i,v}^{(\alpha,\delta)}(n)$ used for DMRS (and spreading sequence for UCI) can be mapped on the i-th PRB $i = 0, 1, \Lambda\, (M_{RB}^{PUCCH,1} - 1)$ and can be defined by a cyclic shift $\alpha$ of a base sequence $\bar{r}_{u_i,v}(n)$ according to $r_{u_i,v}^{(\alpha,\delta)}(n) = e^{j\alpha n}\bar{r}_{u_i,v}(n)$, $0 \le n < M_{ZC}$, where $M_{ZC}$ can be the length of the sequence and the sequence group $u_i$ can be provided by:

$$u_i = \left( f_{gh} + f_{ss} + f_{i,\Delta} \right) mod\, 30.$$

In another example, $f_{i,\Delta}$ can be a fixed sequence group offset (e.g. $f_{i,\Delta} = i \cdot f_{offset}$, where $f_{offset}$ can be a fixed value), or a function of physical or virtual cell ID, symbol or slot index, or the like, wherein $f_{gh}$ and $f_{ss}$ can be the same as defined in 3GPP TS 38.211 V15.5.0 section 6.3.2.2.1. A block of complex valued symbols y(n) = $d(0) . r_{u_i,v}^{(\alpha,\delta)}(n \bmod N_{SC}^{RB})$ can be blockwise spread with orthogonal sequence $w_j(m)$ given by Table 6.3.2.4.1-2 of 3GPP TS 38.211 V15.5.0 section 6.3.2.4.1 and mapped on PUCCH format 1 transmission bandwidth of $M_{SC}^{PUCCH,1} = N_{SC}^{RB} M_{RB}^{PUCCH,1}$. according to:

$$z \left( m' M_{SC}^{PUCCH,1} N_{SF,m'}^{PUCCH,1} + m M_{SC}^{PUCCH,1} + n \right) = w_j(m) . y(n)$$

$$n = 0, 1, \ldots, M_{SC}^{PUCCH,1} - 1$$

$$m = 0, 1, \ldots, N_{SF,m'}^{PUCCH,1} - 1$$

$$m' = \begin{cases} 0 & \text{no intra-slot frequency hopping} \\ 0,1 & \text{intra-slot frequency hopping enabled} \end{cases}$$

wherein $N_{SF,m'}^{PUCCH,1}$ can be provided by Table 6.3.2.4.1-1 of 3GPP TS 38.211 V15.5.0 section 6.3.2.4.1, $d(0)$ can be as defined in section 6.3.2.4.1 of 3GPP TS 38.211 V15.5.0, and $M_{SC}^{PUCCH,1}$ can be the total number of frequency sub-carriers on one symbol used for PUCCH format 1 transmission to meet OCB criteria.

In another example, for 1-symbol NR PUCCH format 1, a length-l (where $l \geq 12$ or, $l < 12$), low PAPR sequence (for example, ZC sequence or CGS) can be used for DMRS and spreading sequence of UCI, and mapped across frequency on the same L subcarriers, which can be contiguous (i.e. localized), non-contiguous (i.e. distributed or interlaced), or a combination thereof to fulfill the OCB criteria, where:

$$L \geq \lceil \{OCB/(SCS)\} \rceil$$

And l can be a factor of L and other quantities (e.g., OCB and SCS) can be similar to above example.

In another example, length-l DMRS and UCI sequences can be mapped on L frequency sub-carriers by applying L/l cyclic shifts. The cyclic shifts applied on DMRS sequences can be different from those applied on UCI sequences.

In another example, the same length-l DMRS and UCI sequences can be repeatedly mapped on L frequency sub-carriers by applying additional phase offsets on each of these repetitions. The phase offsets applied on DMRS sequences can be different from those applied on UCI sequences. For example, if $n_{i,DMRS}$ denotes the cyclic shift applied on DMRS sequences, the cyclic shift applied on UCI sequences can be $n_{UCI}$, wherein:

$$n_{i,UCI} = (n_{i,DMRS} + \nabla_{i,offset}) \bmod (l),$$

Wherein $\nabla_{i,offset}$ can be predefined in the specification and can be either a fixed value or a function of system parameters like physical cell ID, slot or symbol index, or provided by higher layer signaling.

In another example, different base sequences (with cyclic shift hopping and/or base sequence hopping being applied) can used for DMRS and spreading sequence of UCI to generate each of L/l copies of PUCCH format 1, to be mapped on L frequency sub-carriers. Additional phase offsets can be applied on these L/l different copies of PUCCH format 1, wherein the phase offsets applied on the DMRS sequences can be different from those applied on UCI sequences.

In another example, length-l DMRS and UCI sequences can be mapped (e.g., non-contiguously or interlaced) across frequency on the same l sub-carriers so that the bandwidth occupied by l tones of DMRS and UCI fulfill the OCB criteria.

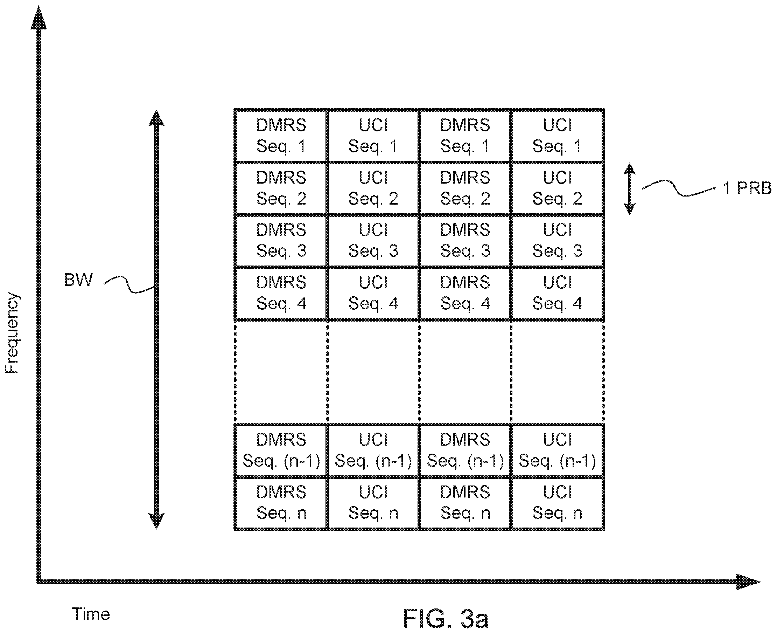

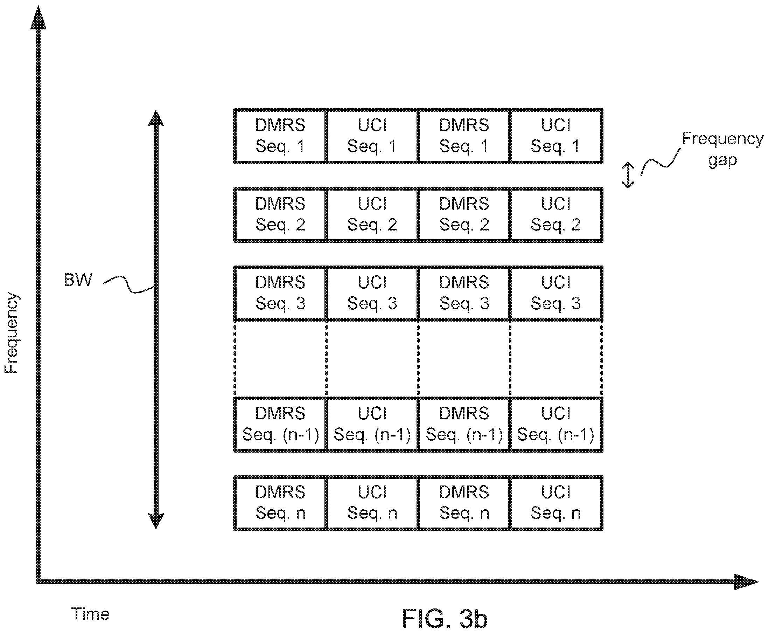

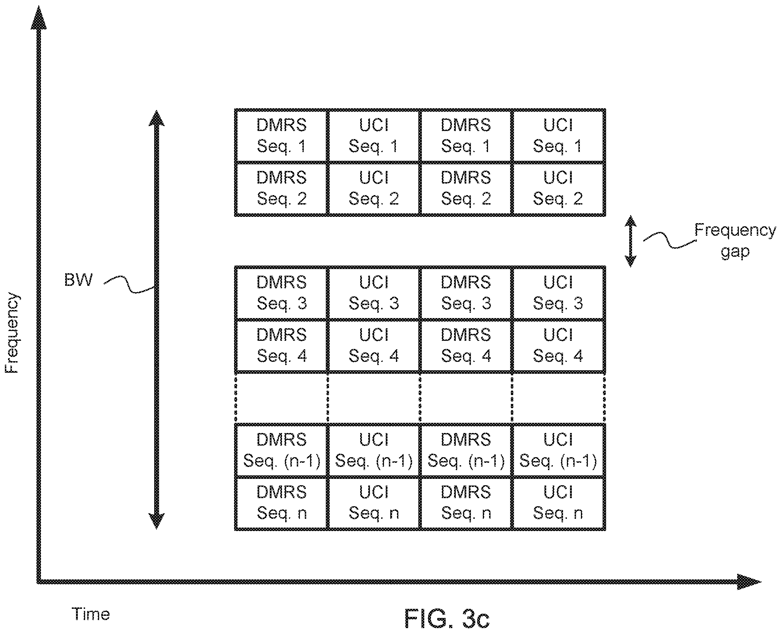

In another example, FIGS. 3a - 3c illustrate the mapping of n sets of sequences across frequency (each set including 2 DMRS sequences and 2 UCI sequences in this example mapped over 4 symbols of PUCCH), (e.g., contiguous in FIG. 3a; non-contiguous in FIG. 3b; or a combination thereof in FIG. 3c), wherein the n sequences can have different cyclic shifts or different phase offsets or different base sequences as described in the above example and the transmission bandwidth over n PRBs can be greater than or equal to the OCB. In the preceding examples, frequency hopping can be enabled or disabled.

In another example, a long computer generated sequence (CGS) or ZC sequence can be applied for the generation of DMRS and UCI sequence. The length of CGS or ZC sequence is equal to the length of allocated subcarriers. As one example, a low PAPR sequence $r_{u,v}^{(\alpha,\delta)}(n)$ of length-L can be generated by a cyclic shift $\alpha$ of a base sequence $\bar{r}_{u,v}(n)$ according to $r_{u,v}^{(\alpha,\delta)}(n) = e^{j\alpha n}\bar{r}_{u,v}(n)$, $0 \leq n < M_{ZC}$, as defined in 3GPP TS 38.211 v15.5.0 section 5.2.2, wherein $M_{ZC} = mN_{sc}^{RB}/2^{\delta}$ can be the length of the sequence and ${m}/{2^{\delta}}$ can depend on the interlace size (i.e., when length-L sequence is mapped on an interlace with ${m}/{2^{\delta}}$ PRBs per interlace). In another example, for a BW of 20 MHz, ${m}/{2^{\delta}} = 10/11$. In another example, length-L sequence can be mapped on L contiguous frequency sub-carriers.

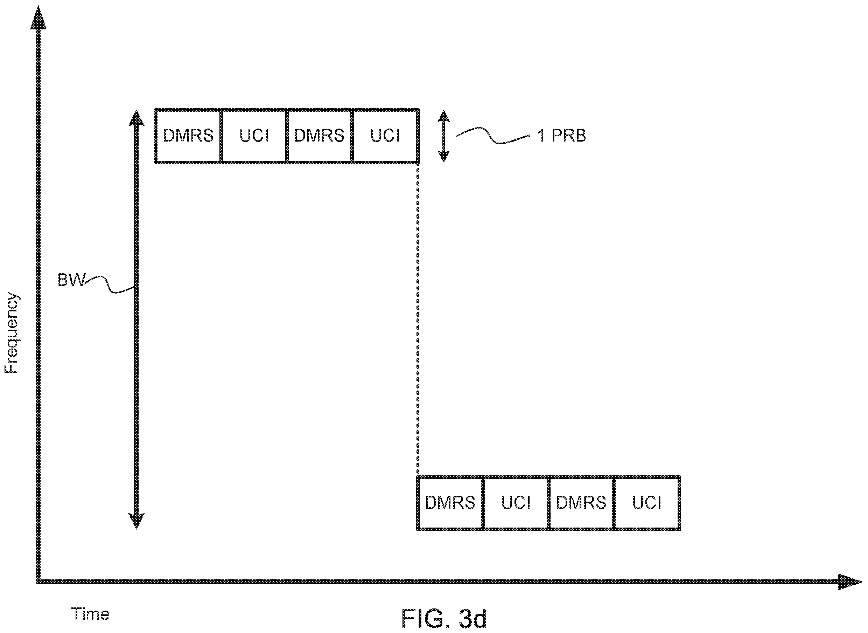

In another example, for N-symbol NR PUCCH format 1 ($4 \leq N \leq 14$), frequency hopping can be enabled so that the total BW occupied by the two frequency hops fulfills the OCB criteria (for example, 80%-100% of nominal channel bandwidth or 2 MHz), as illustrated in FIG. 3d, where 8-symbol PUCCH can be frequency hopped with 4-symbols per hop. Base sequence hopping and/or cyclic shift hopping and/or additional phase offset can be applied between the frequency hops.

**Enhancements of NR PUCCH format 2**

In one example, a lower limit on the number of PRBs ($n_{PRB,min}$) can be predefined in the specification or configured by higher layer signaling (e.g., RRC signaling) or derived based on the subcarrier spacing and allocated BW so that PUCCH format 2 can be allocated at least $n_{PRB,min}$ number of PRBs or more when localized mapping is used across frequency so as to fulfill the OCB criteria.

$$n_{PRB,min} = \lceil\{OCB/(N_{SC}^{RB} * SCS)\}\rceil$$

wherein SCS can denote sub-carrier spacing and $N_{SC}^{RB}$ can denote the number of sub-carriers in one PRB (e.g., 12). Scaling can be applied if the OCB and SCS are expressed in different units. In another example, depending on the OCB criteria, $n_{PRB,min}$ can be greater than the maximum number of PRBs configured in Release 15 specification for NR (i.e. 16 PRBs).

In another example, PUCCH format 2 can be configured by higher layer signaling (e.g., RRC signaling), with $M_{RB}^{PUCCH,2}$ number of PRBs which can be mapped non-contiguously (e.g., distributed or interlaced) in the frequency domain to fulfill the OCB criteria. In another example, $M_{RB}^{PUCCH,2}$ can be determined by the total number of UCI bits and the configured maximum coding rate, and:

$$M_{RB}^{PUCCH,2} \geq \lceil\{OCB/(N_{SC}^{RB} * SCS)\}\rceil.$$

In another example, for N-symbol NR PUCCH format 2, wherein N > 1 (for example, N = 2), the preceding examples can be applied, wherein the same frequency domain resource allocation on one symbol can be repeated across N symbols of PUCCH format 2.

In another example, for N-symbol NR PUCCH format 2, where N > 1 (for example, N = 2), frequency hopping can be enabled so that the total bandwidth occupied by the frequency hops fulfills the OCB criteria. In another example, 2-symbol NR-PUCCH format 2 can be used with frequency hopping enabled between the 1st and the 2nd symbols, wherein the total hopping bandwidth including the 1st and 2nd hops can be greater than or equal to the OCB criteria (for example, 80%-100% of nominal channel bandwidth or 2 MHz).

In another example, NR PUCCH format 2 can be enhanced to support transmission of 1 to 2 UCI bits (e.g., HARQ-ACK or SR bits without CSI reports). In this example, simplex or repetition code can be used to encode 1 or 2-bits HARQ-ACK with or without SR. For SR-only transmission, bit 1 or bit 0 can be transmitted using coding schemes discussed in the preceding corresponding to positive or negative SR respectively. In another example, rather than using simplex or repetition codes, existing coding schemes in NR for PUCCH format 2 can also be used to transmit 1 to 2 UCI bits using PUCCH format 2.

In another example, zero padding can be applied for SR or 1 to 2 UCI bits so that at least 3 bits can be carried by PUCCH format 2. The preceding examples can be applied when PUCCH format 0 or 1 is not defined for the NR unlicensed system.

## Enhancements of NR PUCCH format 3

In one example, a lower limit on the number of PRBs ($n_{PRB,min}$) can be configured by higher layer signaling (e.g., RRC signaling), such that PUCCH format 3 can be allocated at least $n_{PRB,min}$ number of PRBs or more when localized mapping is used across frequency to meet the OCB criteria.

$$n_{PRB,min} \geq [\{OCB/(N_{SC}^{RB} * SCS)\}], \qquad n_{PRB,min} = 2^a * 3^b * 5^c$$

wherein SCS denotes sub-carrier spacing and a, b, and c are integers and $N_{SC}^{RB}$ denotes the number of sub-carriers in one PRB (e.g. 12). Scaling can be applied in if OCB and SCS are expressed in different units. In another example, depending on the OCB criteria, $n_{PRB,min}$ can be greater than the maximum number of PRBs configured in the Release 15 specification for NR (i.e. 16 PRBs).

In another example, PUCCH format 3 can be configured by higher layer signaling (e.g., RRC signaling), with $M_{RB}^{PUCCH,3}$ number of PRBs which can be mapped non-contiguously (e.g., distributed or interlaced) in the frequency domain to meet the OCB criteria. In another example, n can be determined by the total number of UCI bits and the configured maximum coding rate, and:

$$M_{RB}^{PUCCH,3} \geq [\{OCB/(N_{SC}^{RB} * SCS)\}], \qquad M_{RB}^{PUCCH,3} = 2^a * 3^b * 5^c$$

In another example, for N-symbol NR PUCCH format 3 ($4 \leq N \leq 14$), frequency hopping can be enabled so that the total bandwidth occupied by the two frequency hops fulfills the OCB criteria (for example, 80%-100% of nominal channel bandwidth or 2 MHz).

In another example, NR PUCCH format 3 can support transmission of 1 - 2 UCI bits (e.g., HARQ-ACK or SR bits without CSI reports). In this example, simplex or repetition code can be used to encode 1 or 2-bit HARQ-ACK with or without SR. For SR-only transmission, bit 1 or bit 0 can be transmitted using coding schemes discussed in the preceding to positive or negative SR respectively. In another example, instead of using simplex or repetition codes, existing coding schemes in NR for PUCCH format 3 can be used to transmit 1 to 2 UCI bits using PUCCH format 3.

In another example, zero padding can be applied for SR or 1 to 2 UCI bits so that at least 3 bits can be carried by PUCCH format 2. The preceding examples can be applied for the case wherein PUCCH format 0 or 1 is not defined for an NR unlicensed system.

## Enhancements of NR PUCCH format 4

In one example, NR PUCCH format 4 can be configured by higher layer signaling (e.g., RRC signaling), with $M_{RB}^{PUCCH,4}$ number of PRBs ( $M_{RB}^{PUCCH,4} > 1$ ), which can be mapped contiguously or non-contiguously (e.g., distributed or interlaced) in the frequency domain to fulfill the OCB criteria.

$$M_{RB}^{PUCCH,4} \geq [\{OCB/(N_{SC}^{RB} * SCS)\}], \qquad M_{RB}^{PUCCH,4} = 2^a * 3^b * 5^c$$

In another example, to enhance NR PUCCH format 4 frequency domain resource allocation from 1 PRB to more than 1 PRB, $M_{RB}^{PUCCH,4}$ can be determined by the total number of UCI bits and a configured maximum coding rate such that the encoding, scrambling, and DFT-pre-coding of UCI bits can be based on the total number of available frequency resources and UCI symbols mapped across $M_{RB}^{PUCCH,4}$ PRBs. For a DMRS sequence, a cyclic shift offset configured by higher layer signaling can be applied on the DMRS sequence of the 1st PRB to generate the DMRS sequence of the next

$M_{RB}^{PUCCH,4}$ PRBs such that cyclic shift $n_{CS,i}$ can be applied on the DMRS sequence corresponding to the i-th PRB ( $i = 0,1,2,..,M_{RB}^{PUCCH,4} - 1$) can be: $n_{CS,i} = (n_{CS,0} + i * \nabla_{CS}) \bmod M_{SC}^{PUCCH,4}$, wherein $n_{CS,0}$ can be the cyclic shift applied on the DMRS sequence mapped on the 1st PRB (i=0), $M_{SC}^{PUCCH,4} = M_{RB}^{PUCCH,4} * N_{SC}^{RB}$ can be the length of the DMRS sequence mapped on $M_{SC}^{PUCCH,4}$ sub-carriers and $\nabla_{CS}$ can be an offset provided by higher layer signaling. The preceding examples for the generation of the DMRS sequence for NR PUCCH format 3 with length greater than 12 for NR unlicensed system can be applied for the generation of the DMRS sequence for enhanced PUCCH format 4 for unlicensed spectrum.

In another example, UE multiplexing and pre-DFT OCC can be applied on a per-PRB basis. The same OCC can be applied on UCI symbols mapped on each PRB with OCC cycling to keep PAPR low, or block-wise spread OCC applied on $M_{RB}^{PUCCH,4}$ PRBs on which UCI symbols can be mapped. In another example, a one-to-one correspondence between OCC index on UCI symbols and cyclic shift on DMRS sequences on the 1st PRB can be configured.

In another example, block-wise spreading can applied on PUCCH format 4 with $M_{RB}^{PUCCH,4} > 1$ and

$M_{RB}^{PUCCH,4} = 2^{\alpha_2} \cdot 3^{\alpha_3} \cdot 5^{\alpha_4}$. A block of complex valued symbols $y(0), ..., y(N_{SF}^{PUCCH,4} M_{symb} - 1)$ can

be generated according to section 6.3.2.6.3 of 3GPP TS 38.211 v15.5.0:

$$y\left(lM_{SC}^{PUCCH,4} + k\right) = w_n(k) \cdot d\left(l \frac{M_{SC}^{PUCCH,4}}{N_{SF}^{PUCCH,4}} + k \bmod \frac{M_{SC}^{PUCCH,4}}{N_{SF}^{PUCCH,4}}\right)$$

$$k = 0,1,...,M_{SC}^{PUCCH,4} - 1$$

$$l = 0,1,...,\left(N_{SF}^{PUCCH,4} M_{symb} / M_{SC}^{PUCCH,4}\right)$$

wherein $M_{RB}^{PUCCH,4} = 2^{\alpha_2} \cdot 3^{\alpha_3} \cdot 5^{\alpha_4} > 1, N_{SF}^{PUCCH,4} \in \{2,4,..,N_{SF,max}^{PUCCH,4}\}$ and $N_{SF,max}^{PUCCH,4} \leq N_{SC}^{RB}$. $w_n$ can

be based on DFT based OCC code block-wise spread by a factor $M_{SC}^{PUCCH,4} / N_{SF}^{PUCCH,4}$, with n denoting the index of the

orthogonal sequence (n = $0, 1,.., N_{SF}^{PUCCH,4} - 1$).

In another example, block-wise spreading can be applied on enhanced PUCCH format 3 (e.g., interlaced). A block of complex valued symbols $y(0), ..., y(N_{SF}^{PUCCH,3} M_{symb} - 1)$ can be generated according to section 6.3.2.6.3 of 3GPP TS 38.211 v15.5.0:

$$y\left(lM_{SC}^{PUCCH,3} + k\right) = w_n(k) \cdot d\left(l \frac{M_{SC}^{PUCCH,3}}{N_{SF}^{PUCCH,3}} + k \bmod \frac{M_{SC}^{PUCCH,3}}{N_{SF}^{PUCCH,3}}\right)$$

$$k = 0,1,...,M_{SC}^{PUCCH,3} - 1$$

$$l = 0,1,...,\left(N_{SF}^{PUCCH,3} M_{symb} / M_{SC}^{PUCCH,3}\right)$$

wherein $M_{RB}^{PUCCH,3} = 2^{\alpha_2} \cdot 3^{\alpha_3} \cdot 5^{\alpha_4} > 1$, $N_{SF}^{PUCCH,3} \in \{2,4,..,N_{SF,max}^{PUCCH,3}\}$ and $N_{SF,max}^{PUCCH,3} \leq N_{SC}^{RB}$. $w_n$ can be based on DFT based OCC code block-wise spread by a factor $M_{SC}^{PUCCH,3}/N_{SF}^{PUCCH,3}$, with $n$ denoting the index of the orthogonal sequence ($n = 0, 1,..,N_{SF}^{PUCCH,3} - 1)$.

In another example, orthogonal sequences $w_n(m)$ for PUCCH format s with $N_{SF}^{PUCCH,s} = 2$ and $M_{RB}^{PUCCH,s} > 1$ can be obtained from Table 6.3.2.6.3-1 of 3GPP TS 38.211 v15.5.0 by blockwise spreading each row of Table 6.3.2.6.3-1, wherein $w_n(m)$ is of length $M_{SC}^{PUCCH,s}$ and s ∈ {3,4}.

**TABLE 1:**

| $N_{SF}^{PUCCH,s} = 2$ | |
| --- | --- |
| Orthogonal sequences $w_n$ (m) for PUCCH format 3/4 with | |
| $n$ | $w_n$ |
| 0 | $\underbrace{[+1\ +1\ +1\ +1\ ....\ +1}_{M_{SC}^{PUCCH,s}/N_{SF}^{PUCCH,s}\ \text{times}}\ \underbrace{+1\ +1\ +1\ +1\ ...\ +1]}_{M_{SC}^{PUCCH,s}/N_{SF}^{PUCCH,s}\ \text{times}}$ |
| 1 | $\underbrace{[+1\ +1\ +1\ +1....\ +1}_{M_{SC}^{PUCCH,s}/N_{SF}^{PUCCH,s}\ \text{times}}\ \underbrace{-1\ -1\ -1\ -1\ ...\ -1]}_{M_{SC}^{PUCCH,s}/N_{SF}^{PUCCH,s}\ \text{times}}$ |

In another example, Table 1 can be enhanced to $w_n(m)$ for PUCCH format s with $N_{SF}^{PUCCH,s} = 4$ and $M_{RB}^{PUCCH,s} > 1$.

In another example, for N-symbol NR PUCCH format 4 (4 ≤ N ≤ 14), frequency hopping can be enabled so that the total bandwidth occupied by the two frequency hops fulfills the OCB criteria (for example, 80%-100% of nominal channel bandwidth or 2 MHz. Frequency mapping of UCI and DMRS symbols can be applied on n PRBs (n ≥ 2).

In another example, for N-symbol NR PUCCH format 4 (4 ≤ N ≤ 14) occupying 12 sub-carriers over 1 PRB, the 12 sub-carriers can be mapped non-contiguously across frequency to fulfill the OCB criteria.

In another example, NR PUCCH format 4 can be enhanced to support transmission of 1 to 2 UCI bits (e.g., HARQ-ACK or SR bits without CSI reports). In this example, simplex or repetition code may be used to encode 1 or 2-bits HARQ-ACK with or without SR. For SR only transmission, bit 1 or bit 0 can be transmitted using coding schemes corresponding to positive or negative SR respectively. In another example, instead of using simplex or repetition codes, existing coding schemes in NR for PUCCH format 4 can be used to transmit 1 to 2 UCI bits using PUCCH format 4.

In another example, zero padding can be applied for SR or 1 to 2 UCI bits so that at least 3 bits can be carried by PUCCH format 4. The preceding examples can be applied when PUCCH format 0 or 1 is not defined for NR unlicensed system.

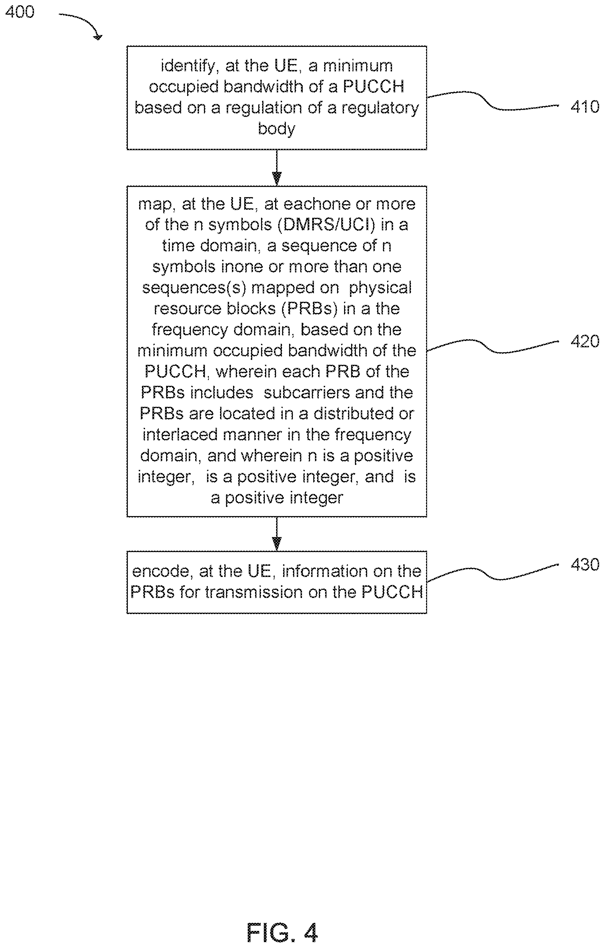

Another example provides functionality 400 of a user equipment (UE) operable for new radio (NR) physical uplink control channel (PUCCH) operation in NR-unlicensed (NR-U), as shown in FIG. 4. The UE can comprise one or more processors. The one or more processors can be configured to identify, at the UE, a minimum occupied bandwidth of a PUCCH based on a regulation of a regulatory body, as in block 410. The one or more processors can be configured to map, at the UE, at one or more of n symbols in a time domain, one or more sequences mapped on $M_{RB}^{PUCCH,x}$ physical resource blocks (PRBs) in a frequency domain, based on the minimum occupied bandwidth of the PUCCH, wherein each PRB of the $M_{RB}^{PUCCH,x}$ PRBs includes $N_{SC}^{RB}$ subcarriers and the $M_{RB}^{PUCCH,x}$ PRBs are distributed in the frequency domain, and wherein $n$ is a positive integer, $M_{RB}^{PUCCH,x}$ is a positive integer, and $N_{SC}^{RB}$ is a positive integer, as in block 420. The one or more processors can be configured to encode, at the UE, information on the $M_{RB}^{PUCCH,x}$ PRBs for transmission on the PUCCH, as in block 430. In addition, the UE can comprise a memory interface configured to retrieve the information from a memory.

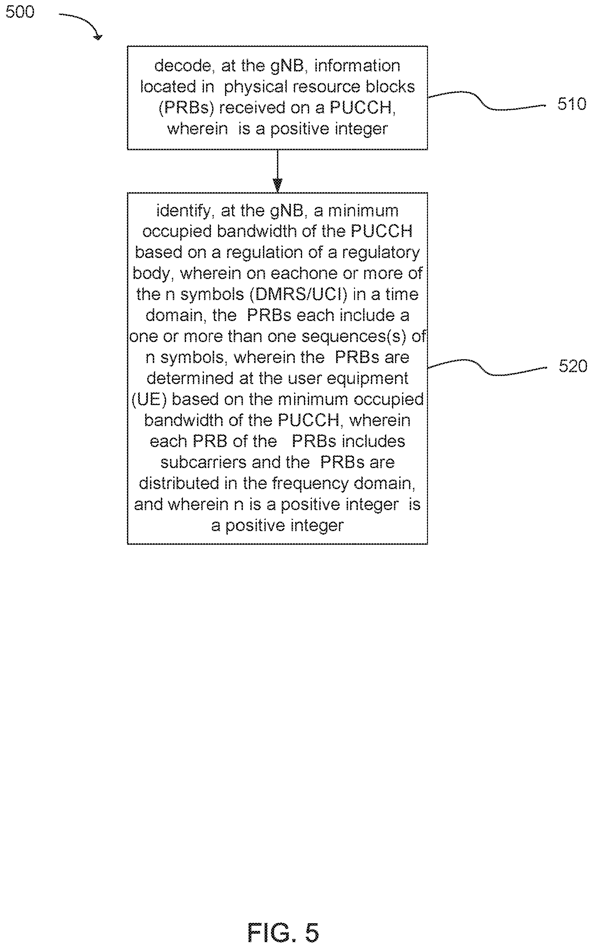

Another example provides functionality 500 of a new radio node B (gNB) operable for new radio (NR) physical uplink control channel (PUCCH) operation in NR-unlicensed (NR-U), as shown in FIG. 5. The gNB can comprise one or more processors. The one or more processors can be configured to decode, at the gNB, information located in $M_{RB}^{PUCCH,x}$ physical resource blocks (PRBs) received on a PUCCH, wherein $M_{RB}^{PUCCH,x}$ is a positive integer, as in block 510. The one or more processors can be configured to identify, at the gNB, a minimum occupied bandwidth of the PUCCH based on a regulation of a regulatory body, wherein on one or more of the n symbols in a time domain, the $M_{RB}^{PUCCH,x}$ PRBs each include one or more sequences, wherein the $M_{RB}^{PUCCH,x}$ PRBs are determined at the user equipment (UE) based on the minimum occupied bandwidth of the PUCCH, wherein each PRB of the $M_{RB}^{PUCCH,x}$ PRBs includes $N_{SC}^{RB}$ subcarriers and the $M_{RB}^{PUCCH,x}$ PRBs are distributed in the frequency domain, and wherein n is a positive integer $N_{SC}^{RB}$ is a positive integer, as in block 520. In addition, the gNB can comprise a memory interface configured to send the information to a memory.

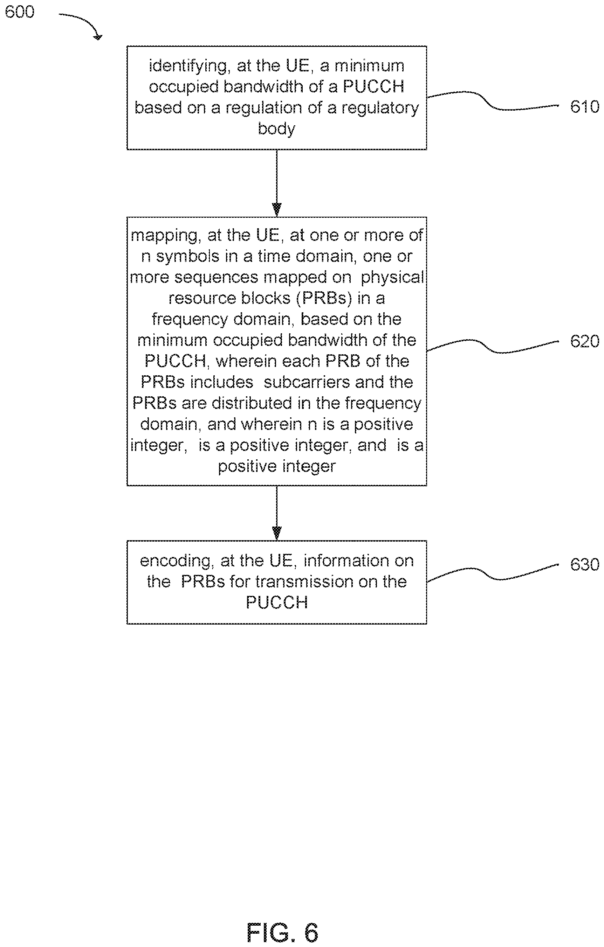

Another example provides at least one machine readable storage medium having instructions 600 embodied thereon for new radio (NR) physical uplink control channel (PUCCH) operation in NR-unlicensed (NR-U), as shown in FIG. 6. The instructions can be executed on a machine, where the instructions are included on at least one computer readable medium or one non-transitory machine readable storage medium. The instructions when executed perform: identifying, at the UE, a minimum occupied bandwidth of a PUCCH based on a regulation of a regulatory body, as in block 610. The instructions when executed perform: mapping, at the UE, at one or more of n symbols in a time domain, one or more sequences mapped on $M_{RB}^{PUCCH,x}$ physical resource blocks (PRBs) in a frequency domain, based on the minimum occupied bandwidth of the PUCCH, wherein each PRB of the $M_{RB}^{PUCCH,x}$ PRBs includes $N_{SC}^{RB}$ subcarriers and the $M_{RB}^{PUCCH,x}$ PRBs are distributed in the frequency domain, and wherein n is a positive integer, $M_{RB}^{PUCCH,x}$ is a positive integer, and $N_{SC}^{RB}$ is a positive integer, as in block 620. The instructions when executed perform: encoding, at the UE, information on the $M_{RB}^{PUCCH,x}$ PRBs for transmission on the PUCCH, as in block 630.

While examples have been provided in which a gNB has been specified, they are not intended to be limiting. An evolved node B (eNB) can be used in place of a next generation node B (gNB), a new radio node B (gNB), or a new radio base station (NR

BS). Accordingly, unless otherwise stated, any example herein in which a gNB has been disclosed, can similarly be disclosed with the use of eNB or new radio base station (NR BS).

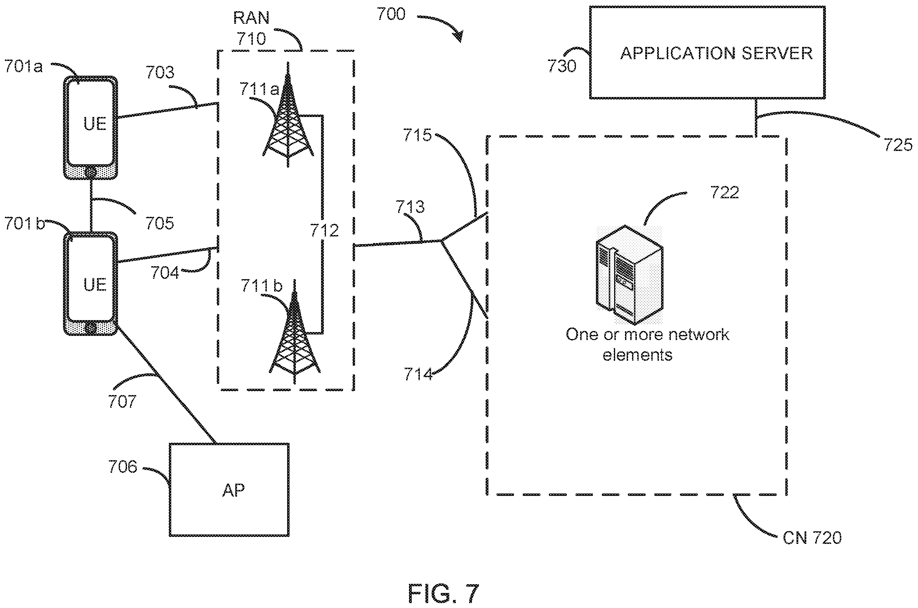

Figure 7 illustrates an example architecture of a system 700 of a network, in accordance with various embodiments. The following description is provided for an example system 700 that operates in conjunction with the LTE system standards and 5G or NR system standards as provided by 3GPP technical specifications. However, the example embodiments are not limited in this regard and the described embodiments may apply to other networks that benefit from the principles described herein, such as future 3GPP systems (e.g., Sixth Generation (6G)) systems, IEEE 802.16 protocols (e.g., WMAN, WiMAX, etc.), or the like.

As shown by Figure 7, the system 700 includes UE 701a and UE 701b (collectively referred to as "UEs 701" or "UE 701"). In this example, UEs 701 are illustrated as smartphones (e.g., handheld touchscreen mobile computing devices connectable to one or more cellular networks), but may also comprise any mobile or non-mobile computing device, such as consumer electronics devices, cellular phones, smartphones, feature phones, tablet computers, wearable computer devices, personal digital assistants (PDAs), pagers, wireless handsets, desktop computers, laptop computers, in-vehicle infotainment (IVI), in-car entertainment (ICE) devices, an Instrument Cluster (IC), head-up display (HUD) devices, onboard diagnostic (OBD) devices, dashtop mobile equipment (DME), mobile data terminals (MDTs), Electronic Engine Management System (EEMS), electronic/engine control units (ECUs), electronic/engine control modules (ECMs), embedded systems, microcontrollers, control modules, engine management systems (EMS), networked or "smart" appliances, MTC devices, M2M, IoT devices, and/or the like.

In some embodiments, any of the UEs 701 may be IoT UEs, which may comprise a network access layer designed for low-power IoT applications utilizing short-lived UE connections. An IoT UE can utilize technologies such as M2M or MTC for exchanging data with an MTC server or device via a PLMN, ProSe or D2D communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 701 may be configured to connect, for example, communicatively couple, with an or RAN 710. In embodiments, the RAN 710 may be an NG RAN or a 5G RAN, an E-UTRAN, or a legacy RAN, such as a UTRAN or GERAN. As used herein, the term "NG RAN" or the like may refer to a RAN 710 that operates in an NR or 5G system 700, and the term "E-UTRAN" or the like may refer to a RAN 710 that operates in an LTE or 4G system 700. The UEs 701 utilize connections (or channels) 703 and 704, respectively, each of which comprises a physical communications interface or layer (discussed in further detail below).

In this example, the connections 703 and 704 are illustrated as an air interface to enable communicative coupling, and can be consistent with cellular communications protocols, such as a GSM protocol, a CDMA network protocol, a PTT protocol, a POC protocol, a UMTS protocol, a 3GPP LTE protocol, a 5G protocol, a NR protocol, and/or any of the other communications protocols discussed herein. In embodiments, the UEs 701 may directly exchange communication data via a ProSe interface 705. The ProSe interface 705 may alternatively be referred to as a SL interface 705 and may comprise one or more logical channels, including but not limited to a PSCCH, a PSSCH, a PSDCH, and a PSBCH.

The UE 701b is shown to be configured to access an AP 706 (also referred to as "WLAN node 706," "WLAN 706," "WLAN Termination 706," "WT 706" or the like) via connection 707. The connection 707 can comprise a local wireless connection, such as a connection consistent with any IEEE 802.11 protocol, wherein the AP 706 would comprise a wireless fidelity (Wi-Fi®) router. In this example, the AP 706 is shown to be connected to the Internet without connecting to the core network of the wireless system (described in further detail below). In various embodiments, the UE 701b, RAN 710, and AP 706 may be configured to utilize LWA operation and/or LWIP operation. The LWA operation may involve the UE 701b in RRC_CONNECTED being configured by a RAN node 711a-b to utilize radio resources of LTE and WLAN. LWIP operation may involve the UE 701b using WLAN radio resources (e.g., connection 707) via IPsec protocol tunneling to authenticate and encrypt packets (e.g., IP packets) sent over the connection 707. IPsec tunneling may include encapsulating the entirety of original IP packets and adding a new packet header, thereby protecting the original header of the IP packets.

The RAN 710 can include one or more AN nodes or RAN nodes 711a and 711b (collectively referred to as "RAN nodes 711" or "RAN node 711") that enable the connections 703 and 704. As used herein, the terms "access node," "access point," or the like may describe equipment that provides the radio baseband functions for data and/or voice connectivity between a network and one or more users. These access nodes can be referred to as BS, gNBs, RAN nodes, eNBs, NodeBs, RSUs, TRxPs or TRPs, and so forth, and can comprise ground stations (e.g., terrestrial access points) or satellite stations providing coverage within a geographic area (e.g., a cell). As used herein, the term "NG RAN node" or the like may refer to a RAN node 711 that operates in an NR or 5G system 700 (for example, a gNB), and the term "E-UTRAN node" or the like may refer to a RAN node 711 that operates in an LTE or 4G system 700 (e.g., an eNB). According to various embodiments, the RAN nodes 711 may be implemented as one or more of a dedicated physical device such as a macrocell base station, and/or a low power (LP) base station for providing femtocells, picocells or other like cells having smaller coverage areas, smaller user capacity, or higher bandwidth compared to macrocells.

In some embodiments, all or parts of the RAN nodes 711 may be implemented as one or more software entities running on server computers as part of a virtual network, which may be referred to as a CRAN and/or a virtual baseband unit pool (vBBUP). In these embodiments, the CRAN or vBBUP may implement a RAN function split, such as a PDCP split wherein RRC and PDCP layers are operated by the CRAN/vBBUP and other L2 protocol entities are operated by individual RAN nodes 711; a MAC/PHY split wherein RRC, PDCP, RLC, and MAC layers are operated by the CRAN/vBBUP and the PHY layer is operated by individual RAN nodes 711; or a "lower PHY" split wherein RRC, PDCP, RLC, MAC layers and upper portions of the PHY layer are operated by the CRAN/vBBUP and lower portions of the PHY layer are operated by individual RAN nodes 711. This virtualized framework allows the freed-up processor cores of the RAN nodes 711 to perform other virtualized applications. In some implementations, an individual RAN node 711 may represent individual gNB-DUs that are connected to a gNB-CU via individual F1 interfaces (not shown by Figure 7). In these implementations, the gNB-DUs may include one or more remote radio heads or RFEMs, and the gNB-CU may be operated by a server that is located in the RAN 710 (not shown) or by a server pool in a similar manner as the CRAN/vBBUP. Additionally or alternatively, one or more of the RAN nodes 711 may be next generation eNBs (ng-eNBs), which are RAN nodes that provide E-UTRA user plane and control plane protocol terminations toward the UEs 701, and are connected to a 5GC via an NG interface (discussed infra).

In V2X scenarios one or more of the RAN nodes 711 may be or act as RSUs. The term "Road Side Unit" or "RSU" may refer to any transportation infrastructure entity used for V2X communications. An RSU may be implemented in or by a suitable RAN node or a stationary (or relatively stationary) UE, where an RSU implemented in or by a UE may be referred to as a "UE-type RSU," an RSU implemented in or by an eNB may be referred to as an "eNB-type RSU," an RSU implemented in or by a gNB may be referred to as a "gNB-type RSU," and the like. In one example, an RSU is a computing device coupled with radio frequency circuitry located on a roadside that provides connectivity support to passing vehicle UEs 701 (vUEs 701). The RSU may also include internal data storage circuitry to store intersection map geometry, traffic statistics, media, as well as applications/software to sense and control ongoing vehicular and pedestrian traffic. The RSU may operate on the 5.9 GHz Direct Short Range Communications (DSRC) band to provide very low latency communications required for high speed events, such as crash avoidance, traffic warnings, and the like. Additionally or alternatively, the RSU may operate on the cellular V2X band to provide the aforementioned low latency communications, as well as other cellular communications services. Additionally or alternatively, the RSU may operate as a Wi-Fi hotspot (2.4 GHz band) and/or provide connectivity to one or more cellular networks to provide uplink and downlink communications. The computing device(s) and some or all of the radio frequency circuitry of the RSU may be packaged in a weatherproof enclosure suitable for outdoor installation, and may include a network interface controller to provide a wired connection (e.g., Ethernet) to a traffic signal controller and/or a backhaul network.

Any of the RAN nodes 711 can terminate the air interface protocol and can be the first point of contact for the UEs 701. In some embodiments, any of the RAN nodes 711 can fulfill various logical functions for the RAN 710 including, but not limited to, radio network controller (RNC) functions such as radio bearer management, uplink and downlink dynamic radio resource management and data packet scheduling, and mobility management.

In embodiments, the UEs 701 can be configured to communicate using OFDM communication signals with each other or with any of the RAN nodes 711 over a multicarrier communication channel in accordance with various communication techniques, such as, but not limited to, an OFDMA communication technique (e.g., for downlink communications) or a SC-FDMA communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 711 to the UEs 701, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

According to various embodiments, the UEs 701 and the RAN nodes 711 communicate data (for example, transmit and receive) data over a licensed medium (also referred to as the "licensed spectrum" and/or the "licensed band") and an unlicensed shared medium (also referred to as the "unlicensed spectrum" and/or the "unlicensed band"). The licensed spectrum may include channels that operate in the frequency range of approximately 400 MHz to approximately 3.8 GHz, whereas the unlicensed spectrum may include the 5 GHz band.

To operate in the unlicensed spectrum, the UEs 701 and the RAN nodes 711 may operate using LAA, eLAA, and/or feLAA mechanisms. In these implementations, the UEs 701 and the RAN nodes 711 may perform one or more known medium-sensing operations and/or carrier-sensing operations in order to determine whether one or more channels in the unlicensed spectrum is unavailable or otherwise occupied prior to transmitting in the unlicensed spectrum. The medium/carrier sensing operations may be performed according to a listen-before-talk (LBT) protocol.

LBT is a mechanism whereby equipment (for example, UEs 701 RAN nodes 711, etc.) senses a medium (for example, a channel or carrier frequency) and transmits when the medium is sensed to be idle (or when a specific channel in the medium is sensed to be unoccupied). The medium sensing operation may include CCA, which utilizes at least ED to determine the presence or absence of other signals on a channel in order to determine if a channel is occupied or clear. This LBT mechanism allows cellular/LAA networks to coexist with incumbent systems in the unlicensed spectrum and with other LAA networks. ED may include sensing RF energy across an intended transmission band for a period of time and comparing the sensed RF energy to a predefined or configured threshold.

Typically, the incumbent systems in the 5 GHz band are WLANs based on IEEE 802.11 technologies. WLAN employs a contention-based channel access mechanism, called CSMA/CA. Here, when a WLAN node (e.g., a mobile station (MS) such as UE 701, AP 706, or the like) intends to transmit, the WLAN node may first perform CCA before transmission. Additionally, a backoff mechanism is used to avoid collisions in situations where more than one WLAN node senses the channel as idle and transmits at the same time. The backoff mechanism may be a counter that is drawn randomly within the CWS, which is increased exponentially upon the occurrence of collision and reset to a minimum value when the transmission succeeds. The LBT mechanism designed for LAA is somewhat similar to the CSMA/CA of WLAN. In some implementations, the LBT procedure for DL or UL transmission bursts including PDSCH or PUSCH transmissions, respectively, may have an LAA contention window that is variable in length between X and Y ECCA slots, where X and Y are minimum and maximum values for the CWSs for LAA. In one example, the minimum CWS for an LAA transmission may be 9 microseconds ($\mu$s); however, the size of the CWS and a MCOT (for example, a transmission burst) may be based on governmental regulations.

The LAA mechanisms are built upon CA technologies of LTE-Advanced systems. In CA, each aggregated carrier is referred to as a CC. A CC may have a bandwidth of 1.4, 3, 5, 10, 15 or 20 MHz and a maximum of five CCs can be aggregated, and therefore, a maximum aggregated bandwidth is 100 MHz. In FDD systems, the number of aggregated carriers can be different for DL and UL, where the number of UL CCs is equal to or lower than the number of DL component carriers. In some cases, individual CCs can have a different bandwidth than other CCs. In TDD systems, the number of CCs as well as the bandwidths of each CC is usually the same for DL and UL.

CA also comprises individual serving cells to provide individual CCs. The coverage of the serving cells may differ, for example, because CCs on different frequency bands will experience different pathloss. A primary service cell or PCell may provide a PCC for both UL and DL, and may handle RRC and NAS related activities. The other serving cells are referred to as S Cells, and each SCell may provide an individual SCC for both UL and DL. The SCCs may be added and removed as required, while changing the PCC may require the UE 701 to undergo a handover. In LAA, eLAA, and feLAA, some or all of the SCells may operate in the unlicensed spectrum (referred to as "LAA SCells"), and the LAA SCells are assisted by a PCell operating in the licensed spectrum. When a UE is configured with more than one LAA SCell, the UE may receive UL grants on the configured LAA SCells indicating different PUSCH starting positions within a same subframe.

The PDSCH carries user data and higher-layer signaling to the UEs 701. The PDCCH carries information about the transport format and resource allocations related to the PDSCH channel, among other things. It may also inform the UEs 701 about the transport format, resource allocation, and HARQ information related to the uplink shared channel. Typically, downlink scheduling (assigning control and shared channel resource blocks to the UE 701b within a cell) may be performed at any of the RAN nodes 711 based on channel quality information fed back from any of the UEs 701. The downlink resource assignment information may be sent on the PDCCH used for (e.g., assigned to) each of the UEs 701.

The PDCCH uses CCEs to convey the control information. Before being mapped to resource elements, the PDCCH complex-valued symbols may first be organized into quadruplets, which may then be permuted using a sub-block interleaver for rate matching. Each PDCCH may be transmitted using one or more of these CCEs, where each CCE may correspond to nine sets of four physical resource elements known as REGs. Four Quadrature Phase Shift Keying (QPSK) symbols may be mapped to each REG. The PDCCH can be transmitted using one or more CCEs, depending on the size of the DCI and the channel condition. There can be four or more different PDCCH formats defined in LTE with different numbers of CCEs (e.g., aggregation level, L=1, 2, 4, or 8).

Some embodiments may use concepts for resource allocation for control channel information that are an extension of the above-described concepts. For example, some embodiments may utilize an EPDCCH that uses PDSCH resources for control information transmission. The EPDCCH may be transmitted using one or more ECCEs. Similar to above, each ECCE may correspond to nine sets of four physical resource elements known as an EREGs. An ECCE may have other numbers of EREGs in some situations.

The RAN nodes 711 may be configured to communicate with one another via interface 712. In embodiments where the system 700 is an LTE system, the interface 712 may be an X2 interface 712. The X2 interface may be defined between two or more RAN nodes 711 (e.g., two or more eNBs and the like) that connect to EPC 720, and/or between two eNBs connecting to EPC 720. In some implementations, the X2 interface may include an X2 user plane interface (X2-U) and an X2 control plane interface (X2-C). The X2-U may provide flow control mechanisms for user data packets transferred over the X2 interface, and may be used to communicate information about the delivery of user data between eNBs. For example, the X2-U may provide specific sequence number information for user data transferred from a MeNB to an SeNB; information about successful in sequence delivery of PDCP PDUs to a UE 701 from an SeNB for user data; information of PDCP PDUs that were not delivered to a UE 701; information about a current minimum desired buffer size at the SeNB for transmitting to the UE user data; and the like. The X2-C may provide intra-LTE access mobility functionality, including context transfers from source to target eNBs, user plane transport control, etc.; load management functionality; as well as inter-cell interference coordination functionality.

In embodiments where the system 700 is a 5G or NR system, the interface 712 may be an Xn interface 712. The Xn interface is defined between two or more RAN nodes 711 (e.g., two or more gNBs and the like) that connect to 5GC 720, between a RAN node 711 (e.g., a gNB) connecting to 5GC 720 and an eNB, and/or between two eNBs connecting to 5GC 720. In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 701 in a connected mode (e.g., CM-CONNECTED) including functionality to manage the UE mobility for connected mode between one or more RAN nodes 711. The mobility support may include context transfer from an old (source) serving RAN node 711 to new (target) serving RAN node 711; and control of user plane tunnels between old (source) serving RAN node 711 to new (target) serving RAN node 711. A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signaling protocol (referred to as Xn Application Protocol (Xn-AP)) and a transport network layer that is built on SCTP. The SCTP may be on top of an IP layer, and may provide the guaranteed delivery of application layer messages. In the transport IP layer, point-to-point transmission is used to deliver the signaling PDUs. In other implementations, the Xn-U protocol stack and/or the Xn-C protocol stack may be same or similar to the user plane and/or control plane protocol stack(s) shown and described herein.

The RAN 710 is shown to be communicatively coupled to a core network-in this embodiment, core network (CN) 720. The CN 720 may comprise a plurality of network elements 722, which are configured to offer various data and telecommunications services to customers/subscribers (e.g., users of UEs 701) who are connected to the CN 720 via the RAN 710. The components of the CN 720 may be implemented in one physical node or separate physical nodes including components to read and execute instructions from a machine-readable or computer-readable medium (e.g., a non-transitory machine-readable storage medium). In some embodiments, NFV may be utilized to virtualize any or all of the above-described network node functions via executable instructions stored in one or more computer-readable storage mediums (described in further detail below). A logical instantiation of the CN 720 may be referred to as a network slice, and a logical instantiation of a portion of the CN 720 may be referred to as a network sub-slice. NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

Generally, the application server 730 may be an element offering applications that use IP bearer resources with the core network (e.g., UMTS PS domain, LTE PS data services, etc.). The application server 730 can also be configured to support one or more communication services (e.g., VoIP sessions, PTT sessions, group communication sessions, social networking services, etc.) for the UEs 701 via the EPC 720.

In embodiments, the CN 720 may be a 5GC (referred to as "5GC 720" or the like), and the RAN 710 may be connected with the CN 720 via an NG interface 713. In embodiments, the NG interface 713 may be split into two parts, an NG user plane (NG-U) interface 714, which carries traffic data between the RAN nodes 711 and a UPF, and the S1 control plane (NG-C) interface 715, which is a signaling interface between the RAN nodes 711 and AMFs.

In embodiments, the CN 720 may be a 5G CN (referred to as "5GC 720" or the like), while in other embodiments, the CN 720 may be an EPC). Where CN 720 is an EPC (referred to as "EPC 720" or the like), the RAN 710 may be connected with the CN 720 via an S1 interface 713. In embodiments, the S1 interface 713 may be split into two parts, an S1 user plane (S1-U) interface 714, which carries traffic data between the RAN nodes 711 and the S-GW, and the S1-MME interface 715, which is a signaling interface between the RAN nodes 711 and MMEs.

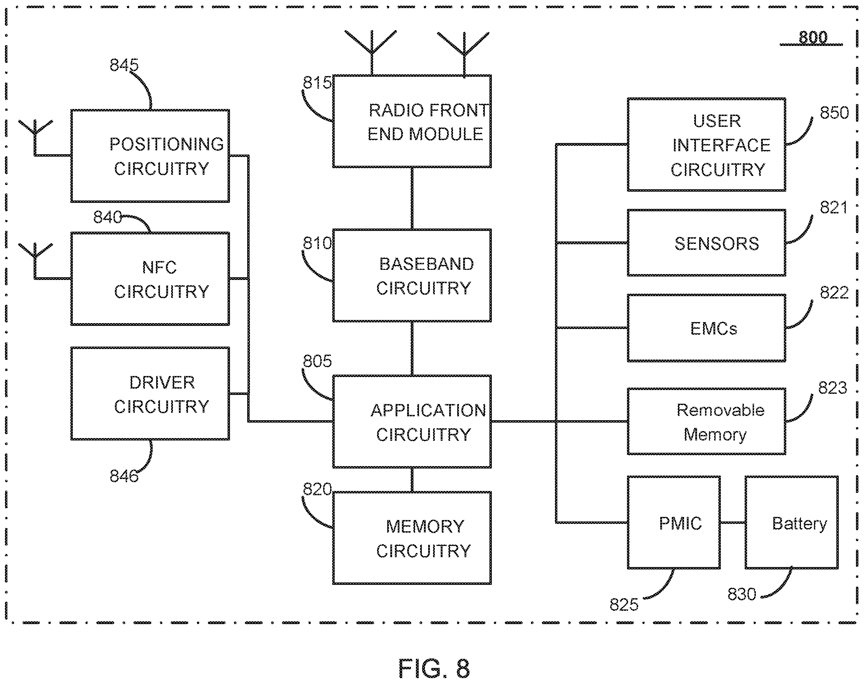

Figure 8 illustrates an example of a platform 800 (or "device 800") in accordance with various embodiments. In embodiments, the computer platform 800 may be suitable for use as UEs 701, application servers 730, and/or any other element/device discussed herein. The platform 800 may include any combinations of the components shown in the example. The components of platform 800 may be implemented as integrated circuits (ICs), portions thereof, discrete electronic devices, or other modules, logic, hardware, software, firmware, or a combination thereof adapted in the computer platform 800, or as components otherwise incorporated within a chassis of a larger system. The block diagram of Figure 8 is intended to show a high level view of components of the computer platform 800. However, some of the components shown may be omitted, additional components may be present, and different arrangement of the components shown may occur in other implementations.

Application circuitry 805 includes circuitry such as, but not limited to one or more processors (or processor cores), cache memory, and one or more of LDOs, interrupt controllers, serial interfaces such as SPI, $I^2C$ or universal programmable serial interface module, RTC, timer-counters including interval and watchdog timers, general purpose I/O, memory card controllers such as SD MMC or similar, USB interfaces, MIPI interfaces, and JTAG test access ports. The processors (or cores) of the application circuitry 805 may be coupled with or may include memory/storage elements and may be configured to execute instructions stored in the memory/storage to enable various applications or operating systems to run on the system 800. In some implementations, the memory/storage elements may be on-chip memory circuitry, which may include any suitable volatile and/or non-volatile memory, such as DRAM, SRAM, EPROM, EEPROM, Flash memory, solid-state memory, and/or any other type of memory device technology, such as those discussed herein.

The processor(s) of application circuitry may include, for example, one or more processor cores, one or more application processors, one or more GPUs, one or more RISC processors, one or more ARM processors, one or more CISC processors, one or more DSP, one or more FPGAs, one or more PLDs, one or more ASICs, one or more microprocessors or controllers, a multithreaded processor, an ultra-low voltage processor, an embedded processor, some other known processing element, or any suitable combination thereof. In some embodiments, the application circuitry may comprise, or may be, a special-purpose processor/controller to operate according to the various embodiments herein.

As examples, the processor(s) of application circuitry 805 may include an Intel® Architecture Core™ based processor, such as a Quark™, an Atom™, an i3, an i5, an i7, or an MCU-class processor, or another such processor available from Intel® Corporation, Santa Clara, CA. The processors of the application circuitry 805 may also be one or more of Advanced Micro Devices (AMD) Ryzen® processor(s) or Accelerated Processing Units (APUs); A5-A9 processor(s) from Apple® Inc., Snapdragon™ processor(s) from Qualcomm® Technologies, Inc., Texas Instruments, Inc.® Open Multimedia Applications Platform (OMAP)™ processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; or the like. In some implementations, the application circuitry 805 may be a part of a system on a chip (SoC) in which the application circuitry 805 and other components are formed into a single integrated circuit, or a single package, such as the Edison™ or Galileo™ SoC boards from Intel® Corporation.

Additionally or alternatively, application circuitry 805 may include circuitry such as, but not limited to, one or more a field-programmable devices (FPDs) such as FPGAs and the like; programmable logic devices (PLDs) such as complex PLDs (CPLDs), high-capacity PLDs (HCPLDs), and the like; ASICs such as structured ASICs and the like; programmable SoCs (PSoCs); and the like. In such embodiments, the circuitry of application circuitry 805 may comprise logic blocks or logic fabric, and other interconnected resources that may be programmed to perform various functions, such as the procedures, methods, functions, etc. of the various embodiments discussed herein. In such embodiments, the circuitry of application circuitry 805 may include memory cells (e.g., erasable programmable read-only memory (EPROM), electrically erasable programmable read-only memory (EEPROM), flash memory, static memory (e.g., static random access memory (SRAM), anti-fuses, etc.)) used to store logic blocks, logic fabric, data, etc. in look-up tables (LUTs) and the like.

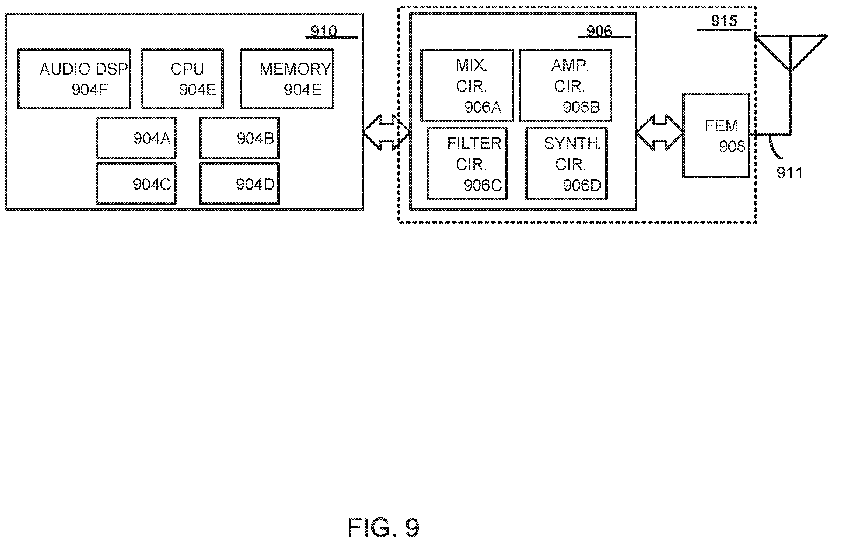

The baseband circuitry 810 may be implemented, for example, as a solder-down substrate including one or more integrated circuits, a single packaged integrated circuit soldered to a main circuit board or a multi-chip module containing two or more integrated circuits. The various hardware electronic elements of baseband circuitry 810 are discussed infra with regard to Figure 9.

The RFEMs 815 may comprise a millimeter wave (mmWave) RFEM and one or more sub-mmWave radio frequency integrated circuits (RFICs). In some implementations, the one or more sub-mmWave RFICs may be physically separated from the mmWave RFEM. The RFICs may include connections to one or more antennas or antenna arrays (see e.g., antenna array 911 of Figure 9 infra), and the RFEM may be connected to multiple antennas. In alternative implementations, both mmWave and sub-mmWave radio functions may be implemented in the same physical RFEM 815, which incorporates both mmWave antennas and sub-mmWave.

The memory circuitry 820 may include any number and type of memory devices used to provide for a given amount of system memory. As examples, the memory circuitry 820 may include one or more of volatile memory including random access memory (RAM), dynamic RAM (DRAM) and/or synchronous dynamic RAM (SDRAM), and nonvolatile memory (NVM) including high-speed electrically erasable memory (commonly referred to as Flash memory), phase change random access memory (PRAM), magnetoresistive random access memory (MRAM), etc. The memory circuitry 820 may be developed in accordance with a Joint Electron Devices Engineering Council (JEDEC) low power double data rate (LPDDR)-based design, such as LPDDR2, LPDDR3, LPDDR4, or the like. Memory circuitry 820 may be implemented as one or more of solder down packaged integrated circuits, single die package (SDP), dual die package (DDP) or quad die package (Q17P), socketed memory modules, dual inline memory modules (DIMMs) including microDIMMs or MiniDIMMs, and/or soldered onto a motherboard via a ball grid array (BGA). In low power implementations, the memory circuitry 820 may be on-die memory or registers associated with the application circuitry 805. To provide for persistent storage of information such as data, applications, operating systems and so forth, memory circuitry 820 may include one or more mass storage devices, which may include, inter alia, a solid state disk drive (SSDD), hard disk drive (HDD), a micro HDD, resistance change memories, phase change memories, holographic memories, or chemical memories, among others. For example, the computer platform 800 may incorporate the three-dimensional (3D) cross-point (XPOINT) memories from Intel® and Micron®.

Removable memory circuitry 823 may include devices, circuitry, enclosures/housings, ports or receptacles, etc. used to couple portable data storage devices with the platform 800. These portable data storage devices may be used for mass storage purposes, and may include, for example, flash memory cards (e.g., Secure Digital (SD) cards, microSD cards, xD picture cards, and the like), and USB flash drives, optical discs, external HDDs, and the like.

The platform 800 may also include interface circuitry (not shown) that is used to connect external devices with the platform 800. The external devices connected to the platform 800 via the interface circuitry include sensor circuitry 821 and electro-mechanical components (EMCs) 822, as well as removable memory devices coupled to removable memory circuitry 823.

The sensor circuitry 821 include devices, modules, or subsystems whose purpose is to detect events or changes in its environment and send the information (sensor data) about the detected events to some other a device, module, subsystem, etc. Examples of such sensors include, inter alia, inertia measurement units (IMUs) comprising accelerometers, gyroscopes, and/or magnetometers; microelectromechanical systems (MEMS) or nanoelectromechanical systems (NEMS) comprising 3-axis accelerometers, 3-axis gyroscopes, and/or magnetometers; level sensors; flow sensors; temperature sensors (e.g., thermistors); pressure sensors; barometric pressure sensors; gravimeters; altimeters; image capture devices (e.g., cameras or lensless apertures); light detection and ranging (LiDAR) sensors; proximity sensors (e.g., infrared radiation detector and the like), depth sensors, ambient light sensors, ultrasonic transceivers; microphones or other like audio capture devices; etc.

EMCs 822 include devices, modules, or subsystems whose purpose is to enable platform 800 to change its state, position, and/or orientation, or move or control a mechanism or (sub)system. Additionally, EMCs 822 may be configured to generate and send messages/signalling to other components of the platform 800 to indicate a current state of the EMCs 822. Examples of the EMCs 822 include one or more power switches, relays including electromechanical relays (EMRs) and/or solid state relays (SSRs), actuators (e.g., valve actuators, etc.), an audible sound generator, a visual warning device, motors (e.g., DC motors, stepper motors, etc.), wheels, thrusters, propellers, claws, clamps, hooks, and/or other like electro-mechanical components. In embodiments, platform 800 is configured to operate one or more EMCs 822 based on one or more captured events and/or instructions or control signals received from a service provider and/or various clients.

In some implementations, the interface circuitry may connect the platform 800 with positioning circuitry 845. The positioning circuitry 845 includes circuitry to receive and decode signals transmitted/broadcasted by a positioning network of a GNSS. Examples of navigation satellite constellations (or GNSS) include United States' GPS, Russia's GLONASS, the European Union's Galileo system, China's BeiDouNavigation Satellite System, a regional navigation system or GNSS augmentation system (e.g., NAVIC), Japan's QZSS, France's DORIS, etc.), or the like. The positioning circuitry 845 comprises various hardware elements (e.g., including hardware devices such as switches, filters, amplifiers, antenna elements, and the like to facilitate OTA communications) to communicate with components of a positioning network, such as navigation satellite constellation nodes. In some embodiments, the positioning circuitry 845 may include a Micro-PNT IC that uses a master timing clock to perform position tracking/estimation without GNSS assistance. The positioning circuitry 845 may also be part of, or interact with, the baseband circuitry and/or RFEMs 815 to communicate with the nodes and components of the positioning network. The positioning circuitry 845 may also provide position data and/or time data to the application circuitry 805, which may use the data to synchronize operations with various infrastructure (e.g., radio base stations), for turn-by-turn navigation applications, or the like

In some implementations, the interface circuitry may connect the platform 800 with Near-Field Communication (NFC) circuitry 840. NFC circuitry 840 is configured to provide contactless, short-range communications based on radio frequency identification (RFID) standards, wherein magnetic field induction is used to enable communication between NFC circuitry 840 and NFC-enabled devices external to the platform 800 (e.g., an "NFC touchpoint"). NFC circuitry 840 comprises an NFC controller coupled with an antenna element and a processor coupled with the NFC controller. The NFC controller may be a chip/IC providing NFC functionalities to the NFC circuitry 840 by executing NFC controller firmware and an NFC stack. The NFC stack may be executed by the processor to control the NFC controller, and the NFC controller firmware may be executed by the NFC controller to control the antenna element to emit short-range RF signals. The RF signals may power a passive NFC tag (e.g., a microchip embedded in a sticker or wristband) to transmit stored data to the NFC circuitry 840, or initiate data transfer between the NFC circuitry 840 and another active NFC device (e.g., a smartphone or an NFC-enabled POS terminal) that is proximate to the platform 800.

The driver circuitry 846 may include software and hardware elements that operate to control particular devices that are embedded in the platform 800, attached to the platform 800, or otherwise communicatively coupled with the platform 800. The driver circuitry 846 may include individual drivers allowing other components of the platform 800 to interact with or control various input/output (I/O) devices that may be present within, or connected to, the platform 800. For example, driver circuitry 846 may include a display driver to control and allow access to a display device, a touchscreen driver to control and allow access to a touchscreen interface of the platform 800, sensor drivers to obtain sensor readings of sensor circuitry 821 and control and allow access to sensor circuitry 821, EMC drivers to obtain actuator positions of the EMCs 822 and/or control and allow access to the EMCs 822, a camera driver to control and allow access to an embedded image capture device, audio drivers to control and allow access to one or more audio devices.

The power management integrated circuitry (PMIC) 825 (also referred to as "power management circuitry 825") may manage power provided to various components of the platform 800. In particular, with respect to the baseband circuitry 810, the PMIC 825 may control power-source selection, voltage scaling, battery charging, or DC-to-DC conversion. The PMIC 825 may often be included when the platform 800 is capable of being powered by a battery 830, for example, when the device is included in a UE 701.

In some embodiments, the PMIC 825 may control, or otherwise be part of, various power saving mechanisms of the platform 800. For example, if the platform 800 is in an RRC_Connected state, where it is still connected to the RAN node as it expects to receive traffic shortly, then it may enter a state known as Discontinuous Reception Mode (DRX) after a period of inactivity. During this state, the platform 800 may power down for brief intervals of time and thus save power. If there is no data traffic activity for an extended period of time, then the platform 800 may transition off to an RRC_Idle state, where it disconnects from the network and does not perform operations such as channel quality feedback, handover, etc. The platform 800 goes into a very low power state and it performs paging where again it periodically wakes up to listen to the network and then powers down again. The platform 800 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 830 may power the platform 800, although in some examples the platform 800 may be mounted deployed in a fixed location, and may have a power supply coupled to an electrical grid. The battery 830 may be a lithium ion battery, a metal-air battery, such as a zinc-air battery, an aluminum-air battery, a lithium-air battery, and the like. In some implementations, such as in V2X applications, the battery 830 may be a typical lead-acid automotive battery.

In some implementations, the battery 830 may be a "smart battery," which includes or is coupled with a Battery Management System (BMS) or battery monitoring integrated circuitry. The BMS may be included in the platform 800 to track the state of charge (SoCh) of the battery 830. The BMS may be used to monitor other parameters of the battery 830 to provide failure predictions, such as the state of health (SoH) and the state of function (SoF) of the battery 830. The BMS may communicate the information of the battery 830 to the application circuitry 805 or other components of the platform 800. The BMS may also include an analog-to-digital (ADC) convertor that allows the application circuitry 805 to directly monitor the voltage of the battery 830 or the current flow from the battery 830. The battery parameters may be used to determine actions that the platform 800 may perform, such as transmission frequency, network operation, sensing frequency, and the like.

A power block, or other power supply coupled to an electrical grid may be coupled with the BMS to charge the battery 830. In some examples, the power block may be replaced with a wireless power receiver to obtain the power wirelessly, for example, through a loop antenna in the computer platform 800. In these examples, a wireless battery charging circuit may be included in the BMS. The specific charging circuits chosen may depend on the size of the battery 830, and thus, the current required. The charging may be performed using the Airfuel standard promulgated by the Airfuel Alliance, the Qi wireless charging standard promulgated by the Wireless Power Consortium, or the Rezence charging standard promulgated by the Alliance for Wireless Power, among others.

User interface circuitry 850 includes various input/output (I/O) devices present within, or connected to, the platform 800, and includes one or more user interfaces designed to enable user interaction with the platform 800 and/or peripheral component interfaces designed to enable peripheral component interaction with the platform 800. The user interface circuitry 850 includes input device circuitry and output device circuitry. Input device circuitry includes any physical or virtual means for accepting an input including, inter alia, one or more physical or virtual buttons (e.g., a reset button), a physical keyboard, keypad, mouse, touchpad, touchscreen, microphones, scanner, headset, and/or the like. The output device circuitry includes any physical or virtual means for showing information or otherwise conveying information, such as sensor readings, actuator position(s), or other like information. Output device circuitry may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Chrystal Displays (LCD), LED displays, quantum dot displays, projectors, etc.), with the output of characters, graphics, multimedia objects, and the like being generated or produced from the operation of the platform 800. The output device circuitry may also include speakers or other audio emitting devices, printer(s), and/or the like. In some embodiments, the sensor circuitry 821 may be used as the input device circuitry (e.g., an image capture device, motion capture device, or the like) and one or more EMCs may be used as the output device circuitry (e.g., an actuator to provide haptic feedback or the like). In another example, NFC circuitry comprising an NFC controller coupled with an antenna element and a processing device may be included to read electronic tags and/or connect with another NFC-enabled device. Peripheral component interfaces may include, but are not limited to, a non-volatile memory port, a USB port, an audio jack, a power supply interface, etc.

Although not shown, the components of platform 800 may communicate with one another using a suitable bus or interconnect (IX) technology, which may include any number of technologies, including ISA, EISA, PCI, PCIx, PCIe, a Time-Trigger Protocol (TTP) system, a FlexRay system, or any number of other technologies. The bus/IX may be a proprietary bus/IX, for example, used in a SoC based system. Other bus/IX systems may be included, such as an I$^2$C interface, an SPI interface, point-to-point interfaces, and a power bus, among others.

Figure 9 illustrates example components of baseband circuitry 910 and radio front end modules (RFEM) 915 in accordance with various embodiments. The baseband circuitry 910 corresponds to the baseband circuitry 810 of Figure 8, respectively. The RFEM 915 corresponds to the RFEM 815 of Figure 8, respectively. As shown, the RFEMs 915 may include Radio Frequency (RF) circuitry 906, front-end module (FEM) circuitry 908, antenna array 911 coupled together at least as shown.

The baseband circuitry 910 includes circuitry and/or control logic configured to carry out various radio/network protocol and radio control functions that enable communication with one or more radio networks via the RF circuitry 906. The radio control functions may include, but are not limited to, signal modulation/demodulation, encoding/decoding, radio frequency shifting, etc. In some embodiments, modulation/demodulation circuitry of the baseband circuitry 910 may include Fast-Fourier Transform (FFT), precoding, or constellation mapping/demapping functionality. In some embodiments, encoding/decoding circuitry of the baseband circuitry 910 may include convolution, tail-biting convolution, turbo, Viterbi, or Low Density Parity Check (LDPC) encoder/decoder functionality. Embodiments of modulation/demodulation and encoder/decoder functionality are not limited to these examples and may include other suitable functionality in other embodiments. The baseband circuitry 910 is configured to process baseband signals received from a receive signal path of the RF circuitry 906 and to generate baseband signals for a transmit signal path of the RF circuitry 906. The baseband circuitry 910 is configured to interface with application circuitry 805 (see Figure 8) for generation and processing of the baseband signals and for controlling operations of the RF circuitry 906. The baseband circuitry 910 may handle various radio control functions.

The aforementioned circuitry and/or control logic of the baseband circuitry 910 may include one or more single or multi-core processors. For example, the one or more processors may include a 3G baseband processor 904A, a 4G/LTE baseband processor 904B, a 5G/NR baseband processor 904C, or some other baseband processor(s) 904D for other existing generations, generations in development or to be developed in the future (e.g., sixth generation (6G), etc.). In other embodiments, some or all of the functionality of baseband processors 904A-D may be included in modules stored in the memory 904G and executed via a Central Processing Unit (CPU) 904E. In other embodiments, some or all of the functionality of baseband processors 904A-D may be provided as hardware accelerators (e.g., FPGAs, ASICs, etc.) loaded with the appropriate bit streams or logic blocks stored in respective memory cells. In various embodiments, the memory 904G may store program code of a real-time OS (RTOS), which when executed by the CPU 904E (or other baseband processor), is to cause the CPU 904E (or other baseband processor) to manage resources of the baseband circuitry 910, schedule tasks, etc. Examples of the RTOS may include Operating System Embedded (OSE)™ provided by Enea®, Nucleus RTOS™ provided by Mentor Graphics®, Versatile Real-Time Executive (VRTX) provided by Mentor Graphics®, ThreadX™ provided by Express Logic®, FreeRTOS, REX OS provided by Qualcomm®, OKL4 provided by Open Kernel (OK) Labs®, or any other suitable RTOS, such as those discussed herein. In addition, the baseband circuitry 910 includes one or more audio digital signal processor(s) (DSP) 904F. The audio DSP(s) 904F include elements for compression/decompression and echo cancellation and may include other suitable processing elements in other embodiments.

In some embodiments, each of the processors 904A-904E include respective memory interfaces to send/receive data to/from the memory 904G. The baseband circuitry 910 may further include one or more interfaces to communicatively couple to other circuitries/devices, such as an interface to send/receive data to/from memory external to the baseband circuitry 910; an application circuitry interface to send/receive data to/from the application circuitry 805 of FIG. 9); an RF circuitry interface to send/receive data to/from RF circuitry 906 of Figure 9; a wireless hardware connectivity interface to send/receive data to/from one or more wireless hardware elements (e.g., Near Field Communication (NFC) components, Bluetooth®/ Bluetooth® Low Energy components, Wi-Fi® components, and/or the like); and a power management interface to send/receive power or control signals to/from the PMIC 825.

In alternate embodiments (which may be combined with the above described embodiments), baseband circuitry 910 comprises one or more digital baseband systems, which are coupled with one another via an interconnect subsystem and to a CPU subsystem, an audio subsystem, and an interface subsystem. The digital baseband subsystems may also be coupled to a digital baseband interface and a mixed-signal baseband subsystem via another interconnect subsystem. Each of the interconnect subsystems may include a bus system, point-to-point connections, network-on-chip (NOC) structures, and/or some other suitable bus or interconnect technology, such as those discussed herein. The audio subsystem may include DSP circuitry, buffer memory, program memory, speech processing accelerator circuitry, data converter circuitry such as analog-to-digital and digital-to-analog converter circuitry, analog circuitry including one or more of amplifiers and filters, and/or other like components. In an aspect of the present disclosure, baseband circuitry 910 may include protocol processing circuitry with one or more instances of control circuitry (not shown) to provide control functions for the digital baseband circuitry and/or radio frequency circuitry (e.g., the radio front end modules 915).

Although not shown by Figure 9, in some embodiments, the baseband circuitry 910 includes individual processing device(s) to operate one or more wireless communication protocols (e.g., a "multi-protocol baseband processor" or "protocol processing circuitry") and individual processing device(s) to implement PHY layer functions. In these embodiments, the PHY layer functions include the aforementioned radio control functions. In these embodiments, the protocol processing circuitry operates or implements various protocol layers/entities of one or more wireless communication protocols. In a first example, the protocol processing circuitry may operate LTE protocol entities and/or 5G/NR protocol entities when the baseband circuitry 910 and/or RF circuitry 906 are part of mmWave communication circuitry or some other suitable cellular communication circuitry. In the first example, the protocol processing circuitry would operate MAC, RLC, PDCP, SDAP, RRC, and NAS functions. In a second example, the protocol processing circuitry may operate one or more IEEE-based protocols when the baseband circuitry 910 and/or RF circuitry 906 are part of a Wi-Fi communication system. In the second example, the protocol processing circuitry would operate Wi-Fi MAC and logical link control (LLC) functions. The protocol processing circuitry may include one or more memory structures (e.g., 904G) to store program code and data for operating the protocol functions, as well as one or more processing cores to execute the program code and perform various operations using the data. The baseband circuitry 910 may also support radio communications for more than one wireless protocol.

The various hardware elements of the baseband circuitry 910 discussed herein may be implemented, for example, as a solder-down substrate including one or more integrated circuits (ICs), a single packaged IC soldered to a main circuit board or a multi-chip module containing two or more ICs. In one example, the components of the baseband circuitry 910 may be suitably combined in a single chip or chipset, or disposed on a same circuit board. In another example, some or all of the constituent components of the baseband circuitry 910 and RF circuitry 906 may be implemented together such as, for example, a system on a chip (SoC) or System-in-Package (SiP). In another example, some or all of the constituent components of the baseband circuitry 910 may be implemented as a separate SoC that is communicatively coupled with and RF circuitry 906 (or multiple instances of RF circuitry 906). In yet another example, some or all of the constituent components of the baseband circuitry 910 and the application circuitry 805 may be implemented together as individual SoCs mounted to a same circuit board (e.g., a "multi-chip package").

In some embodiments, the baseband circuitry 910 may provide for communication compatible with one or more radio technologies. For example, in some embodiments, the baseband circuitry 910 may support communication with an E-UTRAN or other WMAN, a WLAN, a WPAN. Embodiments in which the baseband circuitry 910 is configured to support radio communications of more than one wireless protocol may be referred to as multi-mode baseband circuitry.

RF circuitry 906 may enable communication with wireless networks using modulated electromagnetic radiation through a non-solid medium. In various embodiments, the RF circuitry 906 may include switches, filters, amplifiers, etc. to facilitate the communication with the wireless network. RF circuitry 906 may include a receive signal path, which may include circuitry to down-convert RF signals received from the FEM circuitry 908 and provide baseband signals to the baseband circuitry 910. RF circuitry 906 may also include a transmit signal path, which may include circuitry to up-convert baseband signals provided by the baseband circuitry 910 and provide RF output signals to the FEM circuitry 908 for transmission.

In some embodiments, the receive signal path of the RF circuitry 906 may include mixer circuitry 906a, amplifier circuitry 906b and filter circuitry 906c. In some embodiments, the transmit signal path of the RF circuitry 906 may include filter circuitry 906c and mixer circuitry 906a. RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to down-convert RF signals received from the FEM circuitry 908 based on the synthesized frequency provided by synthesizer circuitry 906d. The amplifier circuitry 906b may be configured to amplify the down-converted signals and the filter circuitry 906c may be a low-pass filter (LPF) or band-pass filter (BPF) configured to remove unwanted signals from the down-converted signals to generate output baseband signals. Output baseband signals may be provided to the baseband circuitry 910 for further processing. In some embodiments, the output baseband signals may be zero-frequency baseband signals, although this is not a requirement. In some embodiments, mixer circuitry 906a of the receive signal path may comprise passive mixers, although the scope of the embodiments is not limited in this respect.

In some embodiments, the mixer circuitry 906a of the transmit signal path may be configured to up-convert input baseband signals based on the synthesized frequency provided by the synthesizer circuitry 906d to generate RF output signals for the FEM circuitry 908. The baseband signals may be provided by the baseband circuitry 910 and may be filtered by filter circuitry 906c.

In some embodiments, the mixer circuitry 906a of the receive signal path and the mixer circuitry 906a of the transmit signal path may include two or more mixers and may be arranged for quadrature downconversion and upconversion, respectively. In some embodiments, the mixer circuitry 906a of the receive signal path and the mixer circuitry 906a of the transmit signal path may include two or more mixers and may be arranged for image rejection (e.g., Hartley image rejection). In some embodiments, the mixer circuitry 906a of the receive signal path and the mixer circuitry 906a of the transmit signal path may be arranged for direct downconversion and direct upconversion, respectively. In some embodiments, the mixer circuitry 906a of the receive signal path and the mixer circuitry 906a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry and the baseband circuitry 910 may include a digital baseband interface to communicate with the RF circuitry 906.

In some dual-mode embodiments, a separate radio IC circuitry may be provided for processing signals for each spectrum, although the scope of the embodiments is not limited in this respect.

In some embodiments, the synthesizer circuitry 906d may be a fractional-N synthesizer or a fractional N/N+1 synthesizer, although the scope of the embodiments is not limited in this respect as other types of frequency synthesizers may be suitable. For example, synthesizer circuitry 906d may be a delta-sigma synthesizer, a frequency multiplier, or a synthesizer comprising a phase-locked loop with a frequency divider.

The synthesizer circuitry 906d may be configured to synthesize an output frequency for use by the mixer circuitry 906a of the RF circuitry 906 based on a frequency input and a divider control input. In some embodiments, the synthesizer circuitry 906d may be a fractional N/N+1 synthesizer.

In some embodiments, frequency input may be provided by a voltage controlled oscillator (VCO), although that is not a requirement. Divider control input may be provided by either the baseband circuitry 910 or the application circuitry 805 depending on the desired output frequency. In some embodiments, a divider control input (e.g., N) may be determined from a look-up table based on a channel indicated by the application circuitry 805.

Synthesizer circuitry 906d of the RF circuitry 906 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 906d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 906 may include an IQ/polar converter.

FEM circuitry 908 may include a receive signal path, which may include circuitry configured to operate on RF signals received from antenna array 911, amplify the received signals and provide the amplified versions of the received signals to the RF circuitry 906 for further processing. FEM circuitry 908 may also include a transmit signal path, which may include circuitry configured to amplify signals for transmission provided by the RF circuitry 906 for transmission by one or more of antenna elements of antenna array 911. In various embodiments, the amplification through the transmit or receive signal paths may be done solely in the RF circuitry 906, solely in the FEM circuitry 908, or in both the RF circuitry 906 and the FEM circuitry 908.

In some embodiments, the FEM circuitry 908 may include a TX/RX switch to switch between transmit mode and receive mode operation. The FEM circuitry 908 may include a receive signal path and a transmit signal path. The receive signal path of the FEM circuitry 908 may include an LNA to amplify received RF signals and provide the amplified received RF signals as an output (e.g., to the RF circuitry 906). The transmit signal path of the FEM circuitry 908 may include a power amplifier (PA) to amplify input RF signals (e.g., provided by RF circuitry 906), and one or more filters to generate RF signals for subsequent transmission by one or more antenna elements of the antenna array 911.

The antenna array 911 comprises one or more antenna elements, each of which is configured convert electrical signals into radio waves to travel through the air and to convert received radio waves into electrical signals. For example, digital baseband signals provided by the baseband circuitry 910 is converted into analog RF signals (e.g., modulated waveform) that will be amplified and transmitted via the antenna elements of the antenna array 911 including one or more antenna elements (not shown). The antenna elements may be omnidirectional, direction, or a combination thereof. The antenna elements may be formed in a multitude of arranges as are known and/or discussed herein. The antenna array 911 may comprise microstrip antennas or printed antennas that are fabricated on the surface of one or more printed circuit boards. The antenna array 911 may be formed in as a patch of metal foil (e.g., a patch antenna) in a variety of shapes, and may be coupled with the RF circuitry 906 and/or FEM circuitry 908 using metal transmission lines or the like.

Processors of the application circuitry 805 and processors of the baseband circuitry 910 may be used to execute elements of one or more instances of a protocol stack. For example, processors of the baseband circuitry 910, alone or in combination, may be used execute Layer 3, Layer 2, or Layer 1 functionality, while processors of the application circuitry 805 may utilize data (e.g., packet data) received from these layers and further execute Layer 4 functionality (e.g., TCP and UDP layers). As referred to herein, Layer 3 may comprise a RRC layer, described in further detail below. As referred to herein, Layer 2 may comprise a MAC layer, an RLC layer, and a PDCP layer, described in further detail below. As referred to herein, Layer 1 may comprise a PHY layer of a UE/RAN node, described in further detail below.

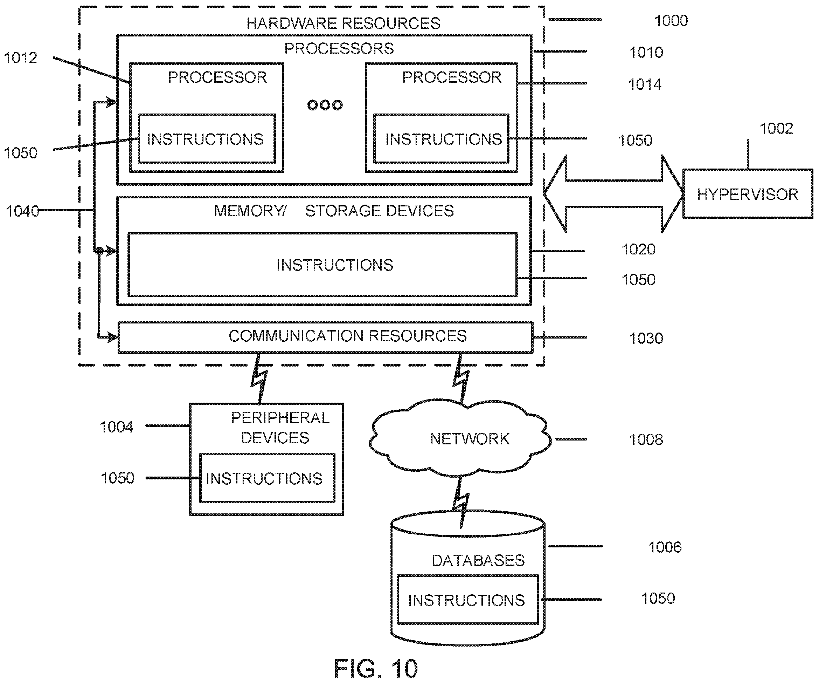

Figure 10 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 10 shows a diagrammatic representation of hardware resources 1000 including one or more processors (or processor cores) 1010, one or more memory/storage devices 1020, and one or more communication resources 1030, each of which may be communicatively coupled via a bus 1040. For embodiments where node virtualization (e.g., NFV) is utilized, a hypervisor 1002 may be executed to provide an execution environment for one or more network slices/sub-slices to utilize the hardware resources 1000.

The processors 1010 may include, for example, a processor 1012 and a processor 1014. The processor(s) 1010 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 1020 may include main memory, disk storage, or any suitable combination thereof. The memory/storage devices 1020 may include, but are not limited to, any type of volatile or nonvolatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 1030 may include interconnection or network interface components or other suitable devices to communicate with one or more peripheral devices 1004 or one or more databases 1006 via a network 1008. For example, the communication resources 1030 may include wired communication components (e.g., for coupling via USB), cellular communication components, NFC components, Bluetooth® (or Bluetooth® Low Energy) components, Wi-Fi® components, and other communication components..

Instructions 1050 may comprise software, a program, an application, an applet, an app, or other executable code for causing at least any of the processors 1010 to perform any one or more of the methodologies discussed herein. The instructions 1050 may reside, completely or partially, within at least one of the processors 1010 (e.g., within the processor's cache memory), the memory/storage devices 1020, or any suitable combination thereof. Furthermore, any portion of the instructions 1050 may be transferred to the hardware resources 1000 from any combination of the peripheral devices 1004 or the databases 1006. Accordingly, the memory of processors 1010, the memory/storage devices 1020, the peripheral devices 1004, and the databases 1006 are examples of computer-readable and machine-readable media.

FIG. 11 provides an example illustration of the wireless device, such as a user equipment (UE), a mobile station (MS), a mobile wireless device, a mobile communication device, a tablet, a handset, or other type of wireless device. The wireless device can include one or more antennas configured to communicate with a node, macro node, low power node (LPN), or, transmission station, such as a base station (BS), an evolved Node B (eNB), a baseband processing unit (BBU), a remote radio head (RRH), a remote radio equipment (RRE), a relay station (RS), a radio equipment (RE), or other type of wireless wide area network (WWAN) access point. The wireless device can be configured to communicate using at least one wireless communication standard such as, but not limited to, 3GPP LTE, WiMAX, High Speed Packet Access (HSPA), Bluetooth, and WiFi. The wireless device can communicate using separate antennas for each wireless communication standard or shared antennas for multiple wireless communication standards. The wireless device can communicate in a wireless local area network (WLAN), a wireless personal area network (WPAN), and/or a WWAN. The wireless device can also comprise a wireless modem. The wireless modem can comprise, for example, a wireless radio transceiver and baseband circuitry (e.g., a baseband processor). The wireless modem can, in one example, modulate signals that the wireless device transmits via the one or more antennas and demodulate signals that the wireless device receives via the one or more antennas.

FIG. 11 also provides an illustration of a microphone and one or more speakers that can be used for audio input and output from the wireless device. The display screen can be a liquid crystal display (LCD) screen, or other type of display screen such as an organic light emitting diode (OLED) display. The display screen can be configured as a touch screen. The touch screen can use capacitive, resistive, or another type of touch screen technology. An application processor and a graphics processor can be coupled to internal memory to provide processing and display capabilities. A non-volatile memory port can also be used to provide data input/output options to a user. The non-volatile memory port can also be used to expand the memory capabilities of the wireless device. A keyboard can be integrated with the wireless device or wirelessly connected to the wireless device to provide additional user input. A virtual keyboard can also be provided using the touch screen.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

## Examples

The following examples pertain to specific technology embodiments and point out specific features, elements, or actions that can be used or otherwise combined in achieving such embodiments.

Example 1 includes an apparatus of a user equipment (UE) operable for new radio (NR) physical uplink control channel (PUCCH) operation in NR-unlicensed (NR-U), the apparatus comprising: one or more processors configured to: identify, at the UE, a minimum occupied bandwidth of a PUCCH based on a regulation of a regulatory body; map, at the UE, at one or more of n symbols in a time domain, one or more sequences mapped on $M_{RB}^{PUCCH,x}$ physical resource blocks (PRBs) in a frequency domain, based on the minimum occupied bandwidth of the PUCCH, wherein each PRB of the $M_{RB}^{PUCCH,x}$ PRBs includes $N_{SC}^{RB}$ subcarriers and the $M_{RB}^{PUCCH,x}$ PRBs are distributed in the frequency domain, and wherein n is a positive integer, $M_{RB}^{PUCCH,x}$ is a positive integer, and $N_{SC}^{RB}$ is a positive integer; and encode, at the UE, information on the $M_{RB}^{PUCCH,x}$ PRBs for transmission on the PUCCH; and a memory interface configured to retrieve the information from a memory.

Example 2 includes the apparatus of Example 1, wherein the one or more processors are further configured to: map, at the UE, at the one or more of the n symbols in the time domain, the one or more sequences on the $M_{RB}^{PUCCH,x}$ PRBs in the frequency domain, by applying $M_{RB}^{PUCCH,x}$ cyclic shifts on the one or more sequences, wherein each PRB of the $M_{RB}^{PUCCH,x}$ PRBs has a selected cyclic shift.

Example 3 includes the apparatus of Example 1, wherein the one or more processors are further configured to: map, at the UE, at the one or more of the n symbols in the time domain, the one or more sequences on the $M_{RB}^{PUCCH,x}$ PRBs by applying $M_{RB}^{PUCCH,x}$ phase offsets to each sequence mapped on the $M_{RB}^{PUCCH,x}$ PRBs of the $M_{RB}^{PUCCH,x}$ PRBs.

Example 4 includes the apparatus of Example 1, wherein the one or more processors are further configured to: map, at the UE, at the one or more of the n symbols in the time domain, one or more additional sequences on the $M_{RB}^{PUCCH,x}$ PRBs, wherein the one or more additional sequences are sequences with different sequence group numbers or different base sequences.

Example 5 includes the apparatus of Example 1, wherein the one or more processors are further configured to: map, at the UE, at the one or more of the n symbols in the time domain, a long sequence mapped on the $M_{RB}^{PUCCH,x}$ PRBs, wherein the long sequence is one or more of a low peak-to-average power ratio (PAPR) sequence, a computer generated sequence (CGS), or a Zadoff-Chu (ZC) sequence.

Example 6 includes the apparatus of Example 5, wherein the length of the long sequence is equal to a length of allocated subcarriers.

Example 7 includes the apparatus of Example 1, wherein the one or more processors are further configured to: map, at the UE, at one or more of the n symbols in the time domain, a sequence mapped on the $M_{RB}^{PUCCH,x}$ PRBs based on a selected bandwidth and a selected subcarrier spacing (SCS).

Example 8 includes the apparatus of Example 7, wherein: the selected bandwidth is 10 megahertz (MHz), 20 MHz, or integer multiples of 20 MHz; or the SCS is 15 kilohertz (kHz), 30 kHz, or 60 kHz.

Example 9 includes the apparatus of any of Examples 1 to 5, wherein the $M_{RB}^{PUCCH,x}$ PRBs are distributed over one interlace.

Example 10 includes the apparatus of any of Examples 1 to 5, wherein the n symbols comprise: a 1-symbol or 2-symbol NR PUCCH format 0.

Example 11 includes the apparatus of any of Examples 1 to 5, wherein the PUCCH is configured for an NR PUCCH format 0 or an NR PUCCH format 1, wherein the PUCCH is further configured to carry: a demodulation reference signal (DM-RS); or an uplink control channel information (UCI) including 1 bit or 2 bits.

Example 12 includes the apparatus of any of Examples 1 to 5, wherein: the minimum occupied bandwidth is an occupied channel bandwidth (OCB); or the regulatory body is the federal communications commission (FCC).

Example 13 includes an apparatus of a new radio node B (gNB) operable for new radio (NR) physical uplink control channel (PUCCH) operation in NR-unlicensed (NR-U), the apparatus comprising: one or more processors configured to: decode, at the gNB, information located in $M_{RB}^{PUCCH,x}$ physical resource blocks (PRBs) received on a PUCCH, wherein $M_{RB}^{PUCCH,x}$ is a positive integer; and identify, at the gNB, a minimum occupied bandwidth of the PUCCH based on a regulation of a regulatory body, wherein on one or more of the n symbols in a time domain, the $M_{RB}^{PUCCH,x}$ PRBs each include one or more sequences, wherein the $M_{RB}^{PUCCH,x}$ PRBs are determined at the user equipment (UE) based on the minimum occupied bandwidth of the PUCCH, wherein each PRB of the $M_{RB}^{PUCCH,x}$ PRBs includes $N_{SC}^{RB}$ subcarriers and the $M_{RB}^{PUCCH,x}$ PRBs are distributed in the frequency domain, and wherein n is a positive integer $N_{SC}^{RB}$ is a positive integer; and a memory interface configured to send the information to a memory.

Example 14 includes the apparatus of Example 13, wherein the $M_{RB}^{PUCCH,x}$ sequences on the $M_{RB}^{PUCCH,x}$ PRBs are mapped at the UE by applying $M_{RB}^{PUCCH,x}$ cyclic shifts on each of the $M_{RB}^{PUCCH,x}$ sequences, wherein each PRB of the $M_{RB}^{PUCCH,x}$ PRBs has a selected cyclic shift.

Example 15 includes the apparatus of Example 13, wherein the $M_{RB}^{PUCCH,x}$ sequences on the $M_{RB}^{PUCCH,x}$ PRBs are mapped at the UE by applying $M_{RB}^{PUCCH,x}$ phase offsets on each of the sequences mapped to each PRB of the $M_{RB}^{PUCCH,x}$ PRBs.

Example 16 includes the apparatus of Example 13, wherein at one or more of the n symbols in the time domain, one or more additional sequences mapped on the $M_{RB}^{PUCCH,x}$ PRBs at the UE, wherein the one or more additional sequences are sequences with different sequence numbers.

Example 17 includes the apparatus of Example 13, wherein a long sequence on the $M_{RB}^{PUCCH,x}$ PRBs is mapped at the UE, wherein the long sequence is one or more of a low peak-to-average power ratio (PAPR) sequence, a computer generated sequence (CGS), or a Zadoff-Chu (ZC) sequence.

Example 18 includes the apparatus of any of Examples 13 to 17, wherein the PUCCH is configured for an NR PUCCH format 0 or an NR PUCCH format 1.

Example 19 includes the apparatus of any of Examples 13 to 17, wherein: the minimum occupied bandwidth is an occupied channel bandwidth (OCB); or the regulatory body is the federal communications commission (FCC).

Example 20 includes at least one machine readable storage medium having instructions embodied thereon for new radio (NR) physical uplink control channel (PUCCH) operation in NR-unlicensed (NR-U), the instructions when executed by one or more processors at a user equipment (UE) perform the following: identifying, at the UE, a minimum occupied bandwidth of a PUCCH based on a regulation of a regulatory body; mapping, at the UE, at one or more of n symbols in a time domain, one or more sequences mapped on $M_{RB}^{PUCCH,x}$ physical resource blocks (PRBs) in a frequency domain, based on the minimum occupied bandwidth of the PUCCH, wherein each PRB of the $M_{RB}^{PUCCH,x}$ PRBs includes $N_{SC}^{RB}$ subcarriers and the $M_{RB}^{PUCCH,x}$ PRBs are distributed in the frequency domain, and wherein n is a positive integer, $M_{RB}^{PUCCH,x}$ is a positive integer, and $N_{SC}^{RB}$ is a positive integer; and encoding, at the UE, information on the $M_{RB}^{PUCCH,x}$ PRBs for transmission on the PUCCH.

Example 21 includes the at least one machine readable storage medium of Example 20, further comprising instructions that when executed perform: mapping, at the UE, at the one or more of the n symbols in the time domain, the one or more sequences on the $M_{RB}^{PUCCH,x}$ PRBs in the frequency domain, by applying $M_{RB}^{PUCCH,x}$ cyclic shifts on the one or more sequences, wherein each PRB of the $M_{RB}^{PUCCH,x}$ PRBs has a selected cyclic shift.

Example 22 includes the at least one machine readable storage medium of Example 20, further comprising instructions that when executed perform: mapping, at the UE, at the one or more of the n symbols in the time domain, the one or more sequences on the $M_{RB}^{PUCCH,x}$ PRBs by applying $M_{RB}^{PUCCH,x}$ phase offsets to each sequence mapped on the $M_{RB}^{PUCCH,x}$ PRBs of the $M_{RB}^{PUCCH,x}$ PRBs.

Example 23 includes the at least one machine readable storage medium of Example 20, further comprising instructions that when executed perform: mapping, at the UE, at the one or more of the n symbols in the time domain, one or more additional sequences on the $M_{RB}^{PUCCH,x}$ PRBs, wherein the one or more additional sequences are sequences with different sequence group numbers or different base sequences.

Example 24 includes the at least one machine readable storage medium of Example 20, further comprising instructions that when executed perform: mapping, at the UE, at the one or more of the n symbols in the time domain, a long sequence mapped on the $M_{RB}^{PUCCH,x}$ PRBs, wherein the long sequence is one or more of a low peak-to-average power ratio (PAPR) sequence, a computer generated sequence (CGS), or a Zadoff-Chu (ZC) sequence.

Example 25 includes the at least one machine readable storage medium of Example 20, further comprising instructions that when executed perform: mapping, at the UE, at one or more of the n symbols in the time domain, a sequence mapped on the $M_{RB}^{PUCCH,x}$ PRBs based on a selected bandwidth and a selected subcarrier spacing (SCS).

Various techniques, or certain aspects or portions thereof, may take the form of program code (i.e., instructions) embodied in tangible media, such as floppy diskettes, compact disc-read-only memory (CD-ROMs), hard drives, non-transitory computer readable storage medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a random-access memory (RAM), erasable programmable read only memory (EPROM), flash drive, optical drive, magnetic hard drive, solid state drive, or other medium for storing electronic data. The node and wireless device may also include a transceiver module (i.e., transceiver), a counter module (i.e., counter), a processing module (i.e., processor), and/or a clock module (i.e., clock) or timer module (i.e., timer). In one example, selected components of the transceiver module can be located in a cloud radio access network (C-RAN). One or more programs that may implement or utilize the various techniques described herein may use an application programming interface (API), reusable controls, and the like. Such programs may be implemented in a high level procedural or object oriented programming language to communicate with a computer system. However, the program(s) may be implemented in assembly or machine language, if desired. In any case, the language may be a compiled or interpreted language, and combined with hardware implementations.

As used herein, the term "circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

It should be understood that many of the functional units described in this specification have been labeled as modules, in order to more particularly emphasize their implementation independence. For example, a module may be implemented as a hardware circuit comprising custom very-large-scale integration (VLSI) circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module may not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "an example" or "exemplary" means that a particular feature, structure, or characteristic described in connection with the example is included in at least one embodiment of the present technology. Thus, appearances of the phrases "in an example" or the word "exemplary" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present technology may be referred to herein along with alternatives for the various components thereof. It is understood that such embodiments, examples, and alternatives are not to be construed as defacto equivalents of one another, but are to be considered as separate and autonomous representations of the present technology.

Furthermore, the described features, structures, or characteristics may be combined in any suitable manner in one or more embodiments. In the following description, numerous specific details are provided, such as examples of layouts, distances, network examples, etc., to provide a thorough understanding of embodiments of the technology. One skilled in the relevant art will recognize, however, that the technology can be practiced without one or more of the specific details, or with other methods, components, layouts, etc. In other instances, well-known structures, materials, or operations are not shown or described in detail to avoid obscuring aspects of the technology.

**Claims**

1. An apparatus of a new radio node B, gNB, (711) operable for new radio, NR, physical uplink control channel, PUCCH, operation in NR-unlicensed, NR-U, the apparatus comprising:

    one or more processors (1010) configured to:

    decode, at the gNB (711), information located in $M_{RB}^{PUCCH,x}$ physical resource blocks, PRBs, (130) received on a PUCCH, wherein $M_{RB}^{PUCCH,x}$ is a positive integer; and
    identify, at the gNB (117), a minimum occupied bandwidth of the PUCCH based on a regulation of a regulatory body,

    wherein on one or more of n symbols in a time domain, the $M_{RB}^{PUCCH,x}$ PRBs each include one or more sequences, the sequences including a demodulation reference signal, DMRS, and uplink control information, UCI, wherein the $M_{RB}^{PUCCH,x}$ PRBs (130) are determined at the user equipment, UE, (701) based on the minimum occupied bandwidth of the PUCCH, wherein each PRB (130) of the $M_{RB}^{PUCCH,x}$ PRBs (130) includes $N_{SC}^{RB}$ subcarriers and the $M_{RB}^{PUCCH,x}$ PRBs (130) are distributed in a frequency domain, and wherein n is a positive integer and $N_{SC}^{RB}$ is a positive integer, wherein the DMRS and UCI is mapped $M_{RB}^{PUCCH,x}$ times across the frequency domain, and wherein $n_{i,DMRS}$ is a cyclic shift applied on a DMRS sequence mapped on an i-th PRB (130) and $n_{i,UCI} = (n_{i,DMRS} + \nabla_{i,offset}) mod M_{ZC}$, where $ni_{,UCI}$ is a cyclic shift applied to a UCI sequence mapped on the i-th PRB (130), $\nabla_{i,offset}$ is a fixed value, a function of system parameters, or is provided by higher layer signaling and $M_{ZC}$ is the length of said UCI sequence; and

a memory interface configured to send the information to a memory (1020).

2. The apparatus of claim 1, wherein the $M_{RB}^{PUCCH,x}$ sequences on the $M_{RB}^{PUCCH,x}$ PRBs are mapped at the UE by applying $M_{RB}^{PUCCH,x}$ cyclic shifts on each of the $M_{RB}^{PUCCH,x}$ sequences, wherein each PRB of the $M_{RB}^{PUCCH,x}$ PRBs has a selected cyclic shift.

3. The apparatus of claim 1, wherein the $M_{RB}^{PUCCH,x}$ sequences on the $M_{RB}^{PUCCH,x}$ PRBs are mapped at the UE by applying $M_{RB}^{PUCCH,x}$ phase offsets on each of the sequences mapped to each PRB of the $M_{RB}^{PUCCH,x}$ PRBs.

4. The apparatus of claim 1, wherein at one or more of n symbols in the time domain, one or more additional sequences mapped on the $M_{RB}^{PUCCH,x}$ PRBs at the UE, wherein the one or more additional sequences are sequences with different sequence numbers.

5. The apparatus of claim 1, wherein a long sequence on the $M_{RB}^{PUCCH,x}$ PRBs is mapped at the UE, wherein the long sequence is one or more of a low peak-to-average power ratio, PAPR, sequence, a computer generated sequence, CGS, or a Zadoff-Chu, ZC, sequence.

6. The apparatus of any of claims 1 to 5, wherein the PUCCH is configured for an NR PUCCH format 0 or an NR PUCCH format 1.

7. The apparatus of any of claims 1 to 5, wherein:
the minimum occupied bandwidth is an occupied channel bandwidth, OCB.

8. At least one machine readable storage medium (1006,1020,1004) having instructions (1050) embodied thereon for new radio, NR, physical uplink control channel, PUCCH, operation in NR-unlicensed, NR-U, the instructions when executed by one or more processors at a user equipment, UE, (701) cause the UE to perform the steps of:

identifying, at the UE (701), a minimum occupied bandwidth of a PUCCH based on a regulation of a regulatory body;
mapping, at the UE (701), at one or more of n symbols in a time domain, one or more sequences mapped on $M_{RB}^{PUCCH,x}$ physical resource blocks, PRBs, (130) in a frequency domain, based on the minimum occupied bandwidth of the PUCCH, wherein each PRB (130) of the $M_{RB}^{PUCCH,x}$ PRBs (130) includes $N_{SC}^{RB}$ subcarriers and the $M_{RB}^{PUCCH,x}$ PRBs (130) are distributed in the frequency domain, and wherein n is a positive integer, $M_{RB}^{PUCCH,x}$ is a positive integer, and $N_{SC}^{RB}$ is a positive integer, the sequences including a demodulation reference signal, DMRS, and uplink control information, UCI is mapped $M_{RB}^{PUCCH,x}$ times across the frequency domain, and wherein $n_{i,DMRS}$ is a cyclic shift applied on a DMRS sequence mapped on an i-th PRB (130) and $n_{i,UCI} = (n_{i,DMRS} + \nabla_{i,offset}) mod M_{ZC}$, where $n_{i,UCI}$ is a cyclic shift applied to a UCI sequence mapped on the i-th PRB (130), $\nabla_{i,offset}$ is a fixed value, a function of system parameters, or is provided by higher layer signaling and $M_{ZC}$ is the length of said UCI sequence; and encoding, at the UE (701), information on the $M_{RB}^{PUCCH,x}$ PRBs (130) for transmission on the PUCCH.

9. The at least one machine readable storage medium of claim 8, further comprising instructions that when executed perform:

mapping, at the UE, at the one or more of the n symbols in the time domain, the one or more sequences on the $M_{RB}^{PUCCH,x}$ PRBs in the frequency domain, by applying $M_{RB}^{PUCCH,x}$ cyclic shifts on the one or more sequences, wherein each PRB of the $M_{RB}^{PUCCH,x}$ PRBs has a selected cyclic shift.

10. The at least one machine readable storage medium of claim 8, further comprising instructions that when executed perform:

mapping, at the UE, at the one or more of the n symbols in the time domain, the one or more sequences on the $M_{RB}^{PUCCH,x}$ PRBs by applying $M_{RB}^{PUCCH,x}$ phase offsets to each sequence mapped on the $M_{RB}^{PUCCH,x}$ PRBs of the $M_{RB}^{PUCCH,x}$ PRBs.

11. The at least one machine readable storage medium of claim 8, further comprising instructions that when executed perform:

mapping, at the UE, at the one or more of the n symbols in the time domain, one or more additional sequences on the $M_{RB}^{PUCCH,x}$ PRBs, wherein the one or more additional sequences are sequences with different sequence group numbers or different base sequences.

12. The at least one machine readable storage medium of claim 8, further comprising instructions that when executed perform:

mapping, at the UE, at the one or more of the n symbols in the time domain, a long sequence mapped on the $M_{RB}^{PUCCH,x}$ PRBs, wherein the long sequence is one or more of a low peak-to-average power ratio, PAPR, sequence, a computer generated sequence, CGS, or a Zadoff-Chu, ZC, sequence.

13. The at least one machine readable storage medium of claim 8, further comprising instructions that when executed perform:

mapping, at the UE, at one or more of the n symbols in the time domain, a sequence mapped on the $M_{RB}^{PUCCH,x}$ PRBs based on a selected bandwidth and a selected subcarrier spacing, SCS.


**Patentansprüche**

1. Vorrichtung eines New Radio-Knotens B (gNB) (711), der für einen physikalischen New Radio(NR)-Uplink-Steuerkanal(PUCCH)-Betrieb in NR-unlicensed (NR-U) betreibbar ist, wobei die Vorrichtung Folgendes umfasst:
einen oder mehrere Prozessoren (1010), die für Folgendes ausgebildet sind:

Decodieren, am gNB (711), von Informationen, die sich in $M_{RB}^{PUCCH,x}$ physischen Ressourcenblöcken (PRBs) (130) befinden, die auf einem PUCCH empfangen werden, wobei $M_{RB}^{PUCCH,x}$ eine positive ganze Zahl ist; und
Identifizieren, am gNB (117), einer minimal belegten Bandbreite des PUCCH basierend auf einer Regelung eines Regulierungsorgans,

wobei auf einem oder mehreren von n Symbolen in einem Zeitbereich die $M_{RB}^{PUCCH,x}$ PRBs jeweils eine oder mehrere Sequenzen enthalten, wobei die Sequenzen ein Demodulationsreferenzsignal (DMRS) und Uplink-Steuerungsinformationen (UCI) enthalten, wobei die $M_{RB}^{PUCCH,x}$ PRBs (130) an der Benutzereinrichtung (UE) (701) bestimmt werden, basierend auf der minimalen belegten Bandbreite des PUCCH, wobei jeder PRB (130) der $M_{RB}^{PUCCH,x}$ PRBs (130) $N_{SC}^{RB}$ Unterträger beinhaltet und die $M_{RB}^{PUCCH,x}$ PRBs (130) in einem Frequenzbereich verteilt sind, und wobei n eine positive Ganzzahl ist und $N_{SC}^{RB}$ eine positive Ganzzahl ist, wobei das DMRS und die UCI $M_{RB}^{PUCCH,x}$ -mal über den Frequenzbereich abgebildet werden, und wobei $n_{i,DMRS}$ eine zyklische Verschiebung ist, die auf eine DMRS-Sequenz angewendet wird, die auf einen *i*-ten PRB (130) und $n_{i,UCI} = (n_{i,DMRS} + \nabla_{i,offset}) mod M_{zc}$ abgebildet wird, wobei $n_{i,UCI}$ eine zyklische Verschiebung ist, die auf eine UCI-Sequenz angewendet wird, die auf dem *i*-ten PRB (130) abgebildet ist, $\nabla_{i,offset}$ ein fester Wert ist, eine Funktion von Systemparametern ist oder durch Signalisierung einer höheren Schicht bereitgestellt wird und $M_{zc}$ die Länge der UCI-Sequenz ist; und

eine Speicherschnittstelle, die dazu ausgebildet ist, die Informationen an einen Speicher (1020) zu senden.

2. Vorrichtung nach Anspruch 1, wobei die $M_{RB}^{PUCCH,x}$ Sequenzen auf den $M_{RB}^{PUCCH,x}$ PRBs an der UE durch Anwenden $M_{RB}^{PUCCH,x}$ zyklischer Verschiebungen auf jede der $M_{RB}^{PUCCH,x}$ Sequenzen abgebildet werden, wobei jeder PRB der $M_{RB}^{PUCCH,x}$ PRBs eine ausgewählte zyklische Verschiebung aufweist.

3. Vorrichtung nach Anspruch 1, wobei die $M_{RB}^{PUCCH,x}$ Sequenzen auf den $M_{RB}^{PUCCH,x}$ PRBs an der UE abgebildet werden, indem $M_{RB}^{PUCCH,x}$ Phasenversätze auf jede der Sequenzen angewendet werden, die auf jeden PRB der $M_{RB}^{PUCCH,x}$ PRBs abgebildet sind.

4. Vorrichtung nach Anspruch 1, wobei bei einem oder mehreren von n Symbolen im Zeitbereich eine oder mehrere zusätzliche Sequenzen auf den $M_{RB}^{PUCCH,x}$ PRBs an der UE abgebildet sind, wobei die eine oder die mehreren zusätzlichen Sequenzen Sequenzen mit unterschiedlichen Sequenznummern sind.

5. Vorrichtung nach Anspruch 1, wobei eine lange Sequenz auf den $M_{RB}^{PUCCH,x}$ PRBs an der UE abgebildet wird, wobei die lange Sequenz eine Sequenz mit einem niedrigen Spitzen-zu-Durchschnitt-Leistungsverhältnis (Peak-to-Average Power Ratio (PAPR)), eine computergenerierte Sequenz (CGS) oder eine Zadoff-Chu(ZC)-Sequenz ist.

6. Vorrichtung nach einem der Ansprüche 1 bis 5, wobei der PUCCH für ein NR-PUCCH-Format 0 oder ein NR-PUCCH-Format 1 ausgebildet ist.

7. Vorrichtung nach einem der Ansprüche 1 bis 5, wobei: die minimal belegte Bandbreite eine belegte Kanalbandbreite (OCB) ist.

8. Mindestens ein maschinenlesbares Speichermedium (1006, 1020, 1004) mit darauf verkörperten Anweisungen (1050) für einen physikalischen New Radio(NR)-Uplink-Steuerkanal(PUCCH)-Betrieb in NR-unlicensed (NR-U), wobei die Anweisungen, wenn sie durch einen oder mehrere Prozessoren an einer Benutzereinrichtung (UE) (701) ausgeführt werden, die UE veranlassen, die folgenden Schritte durchzuführen:

Identifizieren, an der UE (701), einer minimal belegten Bandbreite eines PUCCH basierend auf einer Regelung eines Regulierungsorgans;
Abbilden, an der UE (701), bei einem oder mehreren von n Symbolen in einem Zeitbereich, einer oder mehrerer Sequenzen, die auf $M_{RB}^{PUCCH,x}$ physikalische Ressourcenblöcke (PRBs) (130) in einem Frequenzbereich abgebildet werden, basierend auf der minimalen belegten Bandbreite des PUCCH, wobei jeder PRB (130) der $M_{RB}^{PUCCH,x}$ PRBs (130) $N_{SC}^{RB}$ Unterträger beinhaltet und die $M_{RB}^{PUCCH,x}$ PRBs (130) im Frequenzbereich verteilt sind, und wobei n eine positive Ganzzahl ist, $M_{RB}^{PUCCH,x}$ eine positive Ganzzahl ist und $N_{SC}^{RB}$ eine positive Ganzzahl ist, wobei die Sequenzen ein Demodulationsreferenzsignal (DMRS) und Uplink-Steuerungsinformationen beinhalten, die UCI $M_{RB}^{PUCCH,x}$ -mal über den Frequenzbereich abgebildet werden, und wobei $n_{i,DMRS}$ eine zyklische Verschiebung ist, die auf eine DMRS-Sequenz angewendet wird, die auf einen *i*-ten PRB (130) und $n_{i,UCI} = (n_{i,DMRS} + \nabla_{i,offset}) mod M_{zc}$ abgebildet wird, wobei $n_{i,UCI}$ eine zyklische Verschiebung ist, die auf eine UCI-Sequenz angewendet wird, die auf den *i*-ten PRB (130) abgebildet wird, $\nabla_{i,offset}$ ein fester Wert ist, eine Funktion von Systemparametern ist oder durch Signalisierung höherer Schichten bereitgestellt wird und $M_{zc}$ die Länge der UCI-Sequenz ist; und

Codieren, an der UE (701), von Informationen über die $M_{RB}^{PUCCH,x}$ PRBs (130) zur Übertragung auf dem PUCCH.

9. Mindestens ein maschinenlesbares Speichermedium nach Anspruch 8, das ferner Anweisungen umfasst, die, wenn sie ausgeführt werden, den folgenden Schritt durchführen:
Abbilden, an der UE, an dem einen oder den mehreren der n Symbole im Zeitbereich, der einen oder der mehreren Sequenzen auf den $M_{RB}^{PUCCH,x}$ PRBs im Frequenzbereich durch Anwenden $M_{RB}^{PUCCH,x}$ zyklischer Verschiebungen auf die eine oder die mehreren Sequenzen, wobei jeder PRB der $M_{RB}^{PUCCH,x}$ PRBs eine ausgewählte zyklische Verschiebung aufweist.

10. Mindestens ein maschinenlesbares Speichermedium nach Anspruch 8, das ferner Anweisungen umfasst, die, wenn sie ausgeführt werden, den folgenden Schritt durchführen:
Abbilden, an der UE, an einem oder mehreren der n Symbole im Zeitbereich, der ein oder mehreren Sequenzen auf den $M_{RB}^{PUCCH,x}$ PRBs durch Anwenden von $M_{RB}^{PUCCH,x}$ Phasenverschiebungen auf jede auf den $M_{RB}^{PUCCH,x}$ PRBs der $M_{RB}^{PUCCH,x}$ PRBs abgebildete Sequenz.

11. Mindestens ein maschinenlesbares Speichermedium nach Anspruch 8, das ferner Anweisungen umfasst, die, wenn sie ausgeführt werden, den folgenden Schritt durchführen:
Abbilden, an der UE, an dem einen oder den mehreren der n Symbole in der Zeitdomäne, einer oder mehrerer zusätzlicher Sequenzen auf den $M_{RB}^{PUCCH,x}$ PRBs, wobei die eine oder die mehreren zusätzlichen Sequenzen Sequenzen mit unterschiedlichen Sequenzgruppennummern oder unterschiedlichen Basissequenzen sind.

12. Mindestens ein maschinenlesbares Speichermedium nach Anspruch 8, das ferner Anweisungen umfasst, die, wenn sie ausgeführt werden, den folgenden Schritt durchführen:
Abbilden, an der UE, an dem einen oder den mehreren der n Symbole im Zeitbereich, einer langen Sequenz, die auf die $M_{RB}^{PUCCH,x}$ PRBs abgebildet ist, wobei die lange Sequenz eine Sequenz mit einem niedrigen Spitzen-zu-Durchschnitt-Leistungsverhältnis (PAPR), eine computergenerierte Sequenz (CGS) oder eine Zadoff-Chu(ZC)-Sequenz ist.

13. Mindestens ein maschinenlesbares Speichermedium nach Anspruch 8, das ferner Anweisungen umfasst, die, wenn sie ausgeführt werden, den folgenden Schritt durchführen:
Abbilden, an der UE, an einem oder mehreren der n Symbole im Zeitbereich, einer Sequenz, die auf die $M_{RB}^{PUCCH,x}$ PRBs abgebildet ist, basierend auf einer ausgewählten Bandbreite und einem ausgewählten Unterträgerabstand (SCS).

**Revendications**

1. Appareil d'un nouveau nœud radio B, gNB, (711) pouvant fonctionner pour l'exploitation d'un canal de commande de liaison montante physique, PUCCH, New Radio, NR, sans licence NR, NR-U, l'appareil comprenant :

   un ou plusieurs processeurs (1010) configurés pour :

   décoder, au niveau du gNB (711), des informations situées dans $M_{RB}^{PUCCH,x}$ blocs de ressources physiques, PRB, (130) reçus sur un PUCCH, où $M_{RB}^{PUCCH,x}$ est un entier positif ; et

   identifier, au niveau du gNB (117), une largeur de bande occupée minimale du PUCCH sur la base d'une réglementation d'un organisme de réglementation,

   dans lequel, sur un ou plusieurs des n symboles dans un domaine temporel, les $M_{RB}^{PUCCH,x}$ PRB comprennent chacun une ou plusieurs séquences, les séquences comprenant un signal de référence de démodulation, DMRS, et des informations de contrôle de liaison montante, UCI, où les $M_{RB}^{PUCCH,x}$ PRB (130) sont déterminés au niveau de l'équipement utilisateur, UE, (701) sur la base de la largeur de bande occupée minimale du PUCCH, où chaque PRB (130) des $M_{RB}^{PUCCH,x}$ PRB (130) comprend $N_{SC}^{RB}$ sous-porteuses et les $M_{RB}^{PUCCH,x}$ PRB (130) sont répartis dans un domaine de fréquence, et où n est un entier positif et $N_{SC}^{RB}$ est un entier positif, où le DMRS et l'UCI sont mappés $M_{RB}^{PUCCH,x}$ fois dans le domaine de fréquence, et où $n_{i,DMRS}$ est un décalage cyclique appliqué à une séquence DMRS mappée sur un i-ème PRB (130) et $n_{i,UCI} = (n_{i,DMRS} + \nabla_{i,offset}) mod M_{zc}$, où $n_{i,UCI}$ est un décalage cyclique appliqué à une séquence UCI mappée sur le i-ème PRB (130), $\nabla_{i,offset}$ est une valeur fixe, une fonction de paramètres système, ou est fourni par une signalisation de couche supérieure et $M_{zc}$ est la longueur de ladite séquence UCI ; et

   une interface mémoire configurée pour envoyer les informations à une mémoire (1020).

2. Appareil selon la revendication 1, dans lequel les $M_{RB}^{PUCCH,x}$ séquences sur les $M_{RB}^{PUCCH,x}$ PRB sont mappées au niveau de l'UE en appliquant $M_{RB}^{PUCCH,x}$ décalages cycliques sur chacune des $M_{RB}^{PUCCH,x}$ séquences, où chaque PRB des $M_{RB}^{PUCCH,x}$ PRB a un décalage cyclique sélectionné.

3. Appareil selon la revendication 1, dans lequel les $M_{RB}^{PUCCH,x}$ séquences sur les $M_{RB}^{PUCCH,x}$ PRB sont mappées au niveau de l'UE en appliquant $M_{RB}^{PUCCH,x}$ décalages de phase sur chacune des séquences mappées à chaque PRB des $M_{RB}^{PUCCH,x}$ PRB.

4. Appareil selon la revendication 1, dans lequel pour un ou plusieurs de n symboles dans le domaine temporel, une ou plusieurs séquences supplémentaires sont mappées sur les $M_{RB}^{PUCCH,x}$ PRB au niveau de l'UE, lesdites une ou plusieurs séquences supplémentaires étant des séquences ayant des numéros de séquence différents.

5. Appareil selon la revendication 1, dans lequel une longue séquence sur les $M_{RB}^{PUCCH,x}$ PRB est mappée au niveau de l'UE, la longue séquence étant une ou plusieurs séquences parmi une séquence à faible rapport puissance de crête/puissance moyenne, PAPR, une séquence générée par ordinateur, CGS, ou une séquence Zadoff-Chu, ZC.

6. Appareil selon l'une quelconque des revendications 1 à 5, dans lequel le PUCCH est configuré pour un format NR PUCCH 0 ou un format NR PUCCH 1.

**7.** Appareil selon l'une quelconque des revendications 1 à 5, dans lequel :
la largeur de bande occupée minimale est une largeur de bande de canal occupée, OCB.

**8.** Au moins un support de stockage lisible par machine (1006, 1020, 1004) comportant des instructions (1050) y étant incorporées pour un fonctionnement de canal de commande physique de liaison montante, PUCCH, New Radio, NR, sans licence NR, NR-U, les instructions, lorsqu'elles sont exécutées par un ou plusieurs processeurs au niveau d'un équipement utilisateur, UE (701), amenant l'UE à exécuter les étapes suivantes :

identifier, au niveau de l'UE (701), une largeur de bande occupée minimale d'un PUCCH sur la base d'une réglementation d'un organisme de réglementation ;
mapper, au niveau de l'UE (701), sur un ou plusieurs de n symboles dans un domaine temporel, une ou plusieurs séquences mappées sur $M_{RB}^{PUCCH,x}$ blocs de ressources physiques, PRB, (130) dans un domaine fréquentiel, sur la base de la largeur de bande occupée minimale du PUCCH, où chaque PRB (130) des $M_{RB}^{PUCCH,x}$ PRB (130) comprend $N_{SC}^{RB}$ sous-porteuses et les $M_{RB}^{PUCCH,x}$ PRB (130) sont répartis dans le domaine de fréquence, et où n est un entier positif, $M_{RB}^{PUCCH,x}$ est un entier positif, et $N_{SC}^{RB}$ est un entier positif, les séquences comprenant un signal de référence de démodulation, DMRS, et des informations de contrôle de liaison montante, UCI, sont mappées $M_{RB}^{PUCCH,x}$ fois à travers le domaine fréquentiel, et où $n_{i,DMRS}$ est un décalage cyclique appliqué à une séquence DMRS mappée sur un i-ème PRB (130) et $n_{i,UCI} = (n_{i,DMRS} + V_{i,offset})$ $mod M_{zc}$, où $n_{i,UCI}$ est un décalage cyclique appliqué à une séquence UCI mappée sur le i-ème PRB (130), $V_{i,offset}$ est une valeur fixe, une fonction de paramètres système, ou est fourni par une signalisation de couche supérieure et $M_{zc}$ est la longueur de ladite séquence UCI ; et

coder, au niveau de l'UE (701), des informations sur les $M_{RB}^{PUCCH,x}$ PRB (130) pour une transmission sur le PUCCH.

**9.** Au moins un support de stockage lisible par machine selon la revendication 8, comprenant également des instructions qui, lorsqu'elles sont exécutées, effectuent l'étape suivante :
mapper, au niveau de l'UE, sur les un ou plusieurs symboles des n symboles dans le domaine temporel, les une ou plusieurs séquences sur les $M_{RB}^{PUCCH,x}$ PRB dans le domaine de fréquence, en appliquant $M_{RB}^{PUCCH,x}$ décalages cycliques sur les une ou plusieurs séquences, où chaque PRB des $M_{RB}^{PUCCH,x}$ PRB a un décalage cyclique sélectionné.

**10.** Au moins un support de stockage lisible par machine selon la revendication 8, comprenant également des instructions qui, lorsqu'elles sont exécutées, effectuent l'étape suivante :
mapper, au niveau de l'UE, sur les un ou plusieurs symboles des n symboles dans le domaine temporel, les une ou plusieurs séquences sur les $M_{RB}^{PUCCH,x}$ PRB en appliquant $M_{RB}^{PUCCH,x}$ décalages de phase à chaque séquence mappée sur les $M_{RB}^{PUCCH,x}$ PRB des $M_{RB}^{PUCCH,x}$ PRB.

**11.** Au moins un support de stockage lisible par machine selon la revendication 8, comprenant également des instructions qui, lorsqu'elles sont exécutées, effectuent l'étape suivante :
mapper, au niveau de l'UE, sur les un ou plusieurs symboles des n symboles dans le domaine temporel, une ou plusieurs séquences supplémentaires sur les $M_{RB}^{PUCCH,x}$ PRB, où les une ou plusieurs séquences supplémentaires sont des séquences avec des numéros de groupe de séquences différents ou des séquences de base différentes.

**12.** Au moins un support de stockage lisible par machine selon la revendication 8, comprenant également des instructions qui, lorsqu'elles sont exécutées, effectuent l'étape suivante :

mapper, au niveau de l'UE, sur les un ou plusieurs symboles des n symboles dans le domaine temporel, une longue séquence mappée sur les $M_{RB}^{PUCCH,x}$ PRB, où la longue séquence est une ou plusieurs séquences parmi une séquence à faible rapport puissance de crête/puissance moyenne, PAPR, une séquence générée par ordinateur, CGS, ou une séquence Zadoff-Chu, ZC.

**13.** Au moins un support de stockage lisible par machine selon la revendication 8, comprenant également des instructions qui, lorsqu'elles sont exécutées, effectuent l'étape suivante :

mapper, au niveau de l'UE, sur un ou plusieurs symboles des n symboles dans le domaine temporel, d'une séquence mappée sur les $M_{RB}^{PUCCH,x}$ PRB sur la base d'une largeur de bande sélectionnée et d'un espacement entre sous-porteuses sélectionné, SCS.

FIG. 1

FIG. 2a

EP 3 831 008 B1

FIG. 2b

FIG. 2c

Different cyclic
shifts of the
same length-12
base sequence

FIG. 2d

FIG. 2e

FIG. 2f

FIG. 2g

EP 3 831 008 B1

FIG. 3a

FIG. 3b

EP 3 831 008 B1

FIG. 3c

FIG. 3d

400

identify, at the UE, a minimum occupied bandwidth of a PUCCH based on a regulation of a regulatory body — 410

map, at the UE, at eachone or more of the n symbols (DMRS/UCI) in a time domain, a sequence of n symbols inone or more than one sequences(s) mapped on physical resource blocks (PRBs) in a the frequency domain, based on the minimum occupied bandwidth of the PUCCH, wherein each PRB of the PRBs includes subcarriers and the PRBs are located in a distributed or interlaced manner in the frequency domain, and wherein n is a positive integer, is a positive integer, and is a positive integer — 420

encode, at the UE, information on the PRBs for transmission on the PUCCH — 430

# FIG. 4

500

decode, at the gNB, information located in  physical resource blocks (PRBs) received on a PUCCH, wherein  is a positive integer

510

identify, at the gNB, a minimum occupied bandwidth of the PUCCH based on a regulation of a regulatory body, wherein on eachone or more of the n symbols (DMRS/UCI) in a time domain, the  PRBs each include a one or more than one sequences(s) of n symbols, wherein the  PRBs are determined at the user equipment (UE) based on the minimum occupied bandwidth of the PUCCH, wherein each PRB of the  PRBs includes subcarriers and the  PRBs are distributed in the frequency domain, and wherein n is a positive integer  is a positive integer

520

FIG. 5

600

identifying, at the UE, a minimum occupied bandwidth of a PUCCH based on a regulation of a regulatory body — 610

mapping, at the UE, at one or more of n symbols in a time domain, one or more sequences mapped on physical resource blocks (PRBs) in a frequency domain, based on the minimum occupied bandwidth of the PUCCH, wherein each PRB of the PRBs includes subcarriers and the PRBs are distributed in the frequency domain, and wherein n is a positive integer, is a positive integer, and is a positive integer — 620

encoding, at the UE, information on the PRBs for transmission on the PUCCH — 630

# FIG. 6

FIG. 7

FIG. 8

FIG. 9

FIG. 10

Mobile
Device

Multiple
Antennas

Non-Volatile
Memory Port

Speaker

Display Screen and/or
Touch Screen Display

Speaker

Application
Processor

Graphics
Processor

Internal
Memory

Keyboard

Microphone

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **HUAWEI et al.** UL PHY channels for NR unlicensed. *3GPP DRAFT; R1-1805921, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 11 May 2018, vol. RAN WG1 (Busan)

- **INTERDIGITAL INC**. On UL Signals and Channels in NR-Unlicensed. *3GPP DRAFT; R1-1807035 ON UL SIGNALS AND CHANNELS IN NR-UNLICENSED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA*, 12 May 2018, vol. RAN WG1 (Busan)